# EUROPEAN PATENT SPECIFICATION

(11) **EP 1 717 197 B1**
(45) Date of publication and mention of the grant of the patent: **25.10.2017**
(21) Application number: 05709740.4
(22) Date of filing: 04.02.2005
(51) Int. Cl.: C01B 3/38, H01M 8/06, B01J 8/02

(54) **HYDROGEN PRODUCING DEVICE AND FUEL CELL SYSTEM WITH THE SAME**
VORRICHTUNG ZUR ERZEUGUNG VON WASSERSTOFF UND BRENNSTOFFZELLENSYSTEM DAMIT
DISPOSITIF DE PRODUCTION D'HYDROGE NE ET SYSTEME DE PILE COMBUSTIBLE L'UTILISANT

(30) Priority: 17.02.2004 JP 2004040005
(43) Date of publication of application: 02.11.2006
(73) Proprietor: Panasonic Intellectual Property Management Co., Ltd., Osaka-shi, Osaka 540-6207 (JP)
(72) Inventor: MAENISHI, Akira matsushita Electric Ind. Co., Ltd., Chuo-ku, Osaka-shi, Osaka 540-6319 (JP); MUKAI, Yuji, Osaka 571-0070 (JP); UKAI, Kunihiro, Nara 630-0213 (JP); ASOU, Tomonori, Nara 635-0831 (JP)
(74) Representative: Leinweber & Zimmermann
(86) International application number: PCT/JP2005/001674
(87) International publication number: WO 2005/077823

(56) References cited:
- EP-A1- 0 922 666
- EP-A1- 1 094 031
- EP-A2- 1 324 414
- WO-A1-02/085781
- WO-A1-2005/000737
- JP-A- 1 264 904
- JP-A- 3 237 002
- JP-A- 6 345 405
- JP-A- 2003 252 604
- JP-A- 2003 300 703
- JP-A- 2003 321 206

## Description

### Technical Field

The present invention relates to a hydrogen generator and a fuel cell system comprising the hydrogen generator. More particularly, the present invention relates to a hydrogen generator constructed in such a manner that a reforming catalyst body and a water evaporator are arranged in their axial direction with a center axis of the water evaporator conforming to a center axis of the reforming catalyst body, and a fuel cell system comprising the hydrogen generator.

### Background Art

Fuel cell systems are configured to cause a hydrogen-rich gas (reformed gas) supplied to an anode of a fuel cell and an oxidizing gas supplied to a cathode of the fuel cell to electrochemically react with each other within the fuel cell, to thereby generate electric power and heat.

Hydrogen generators are configured to generate the reformed gas through steam reforming reaction from a feed gas (e.g., natural gas or city gas) and steam, and to supply the reformed gas to the anode of the fuel cell.

In the steam reforming reaction, it is necessary to receive heat for evaporating water or heat for causing reforming reaction to proceed, from a high-temperature combustion gas in a heating burner. For the purpose of efficient use of heat energy, it is essential that heat exchange be efficiently conducted between the water and the reforming catalyst body, and the combustion gas.

In order to achieve the above-mentioned objective, for example, there has been disclosed a hydrogen generator (see patent document 1) in which a water evaporator is disposed to surround a tubular reformer containing a reforming catalyst body therein in a circumferential direction thereof with a combustion gas passage interposed between the reformer and the water evaporator. In this hydrogen generator, the combustion gas passage and the reformer are surrounded by the water evaporator to reduce heat radiation amount of the high-temperature combustion gas flowing in the combustion gas passage and heat radiation amount of the reforming catalyst body kept at a high temperature, thereby improving heat efficiency in the hydrogen generator.

Patent Document 1: Japanese Laid-Open Patent Application Publication No. 2003 -252604

### Disclosure of the Invention

### Problems to be Solved by the Invention

However, in the above mentioned conventional hydrogen generator, a gas mixture passage may be intricate in structure, because a gas mixture containing the feed gas and the steam changes its direction from the axial direction of the water evaporator to the circumferential direction of the water evaporator while flowing from the water evaporator to the reformer.

For example, since a gas mixture feed pipe connecting a gas mixture outlet of the water evaporator to a gas mixture inlet of the reformer extends radially, piping work such as welding is required at a joint portion at which the gas mixture feed pipe and the reformer extending axially are joined to each other.

Such piping work of the gas mixture passage may increase a cost of the hydrogen generator and degrade durability of the hydrogen generator. To be specific, it may be assumed that, because of the presence of the welded portion, durability of the hydrogen generator with respect to a heat cycle of a DSS (Daily Start - up & Shut - down) operation which repeats start-up and shut-down operations is not sufficiently ensured.

It is believed that an evaporation state of the steam in the water evaporator varies depending on an inner diameter of the water evaporator, and therefore is made uniform by decreasing the inner diameter. Nonetheless, in the conventional hydrogen generator in which the water evaporator is disposed at an outermost periphery to surround the reformer and the combustion gas passage, reduction of the inner diameter of the water evaporator is limited, making it difficult to make the evaporation state of the steam to uniform.

The present invention has been made under the circumstances, and an object of the present invention is to provide a hydrogen generator that improves durability with respect to a heat cycle and reduces a cost by simplifying a structure of gas passages and that enables an evaporation state of steam to be made uniform, and a fuel cell system comprising the hydrogen generator.

JP 2003 300703 A discloses a fuel reformer to reform a gas mixture into a reform gas containing hydrogen. The fuel reformer contains a mixing chamber into which steam and reforming material are inserted and from which the gas mixture of the steam and the reforming material is guided to a reforming catalyst filled layer via a reforming section inlet gas passage.

### Means for Solving the Problems

A hydrogen generator of the present invention is provided according to claim 1. It comprises a first tubular wall element; a second tubular wall element disposed outside the first
tubular wall element and coaxially with the first tubular wall element; a tubular water evaporator provided in a tubular space formed between the first and second tubular wall elements; a tubular reforming catalyst body provided in the tubular space, the water evaporator and the reforming catalyst body being arranged in an axial direction of the first and second tubular wall elements; a water inlet from which water is supplied to the water evaporator; and a feed gas inlet from which a feed gas is supplied to the water evaporator; wherein the hydrogen generator is configured to cause a gas mixture containing steam and the feed gas to flow from the water evaporator to the reforming catalyst body and to reform the gas mixture into a reformed gas containing hydrogen.

By arranging the water evaporator and the reforming catalyst body in their axial direction, the gas mixture is able to flow smoothly axially in the interior of the water evaporator from the water evaporator toward the reforming catalyst body. In such a construction, since intricate gas passages formed by piping work such as welding are reduced, durability of the hydrogen generator with respect to a heat cycle of a DSS operation is improved, and a manufacturing cost is reduced by simplifying the gas passage.

It is desirable to cause the reformed gas to flow from an axial end of the reforming catalyst body.

The water evaporator may be disposed under the reforming catalyst body. Thereby, only the steam is supplied to the reforming catalyst body, and it is thus possible to inhibit degradation of the reforming catalyst body which may be caused by flowing water droplets from the water evaporator to the reforming catalyst body.

The first and second tubular wall elements may be each constructed of a cylindrical seamless pipe. Thereby, seams of piping work such as welding are omitted, and thus durability with respect to the heat cycle of the DSS operation is improved.

The hydrogen generator may further comprise a burner configured to combust a combustible gas to generate a combustion gas; and a third tubular wall element disposed inward of the first tubular wall element and coaxially with the first tubular wall element, wherein the combustion gas may be caused to flow in a tubular space which is a combustion gas passage formed between the first and third tubular wall elements.

The burner may be oriented to cause a flame to be emitted upward from the burner.

With such a configuration, the heat is transferred from the combustion gas to the reforming catalyst body efficiently by heat exchange between them, and to the water in the water evaporator efficiently by heat exchange between them. In addition, since the combustion gas passage in which a high-temperature combustion gas flows is disposed on inner side of the first tubular wall element, heat radiation from the combustion gas is effectively inhibited. The burner may be disposed in an internal space of the third tubular wall element, and the hydrogen generator may further comprise a first lid element disposed with a gap between the first lid element and an upper end of the third tubular wall element so as to close an upper end of the first tubular wall element, wherein the combustion gas generated in the burner may be caused to flow from an interior of the third tubular wall element into the combustion gas passage through the gap.

The first tubular wall element may be provided with a combustion gas outlet through which the combustion gas flowing in the combustion gas passage is guided to outside, and a combustion gas exhaust pipe may be connected to the first tubular wall element to allow the combustion gas flowing out from the combustion gas outlet to be guided radially and downward of the first tubular wall element. By tilting the combustion gas exhaust portion downward, water droplets resulting from condensation of the steam contained in the combustion gas are discharged to outside together with the combustion gas. Thus, the amount of water reserved in the interior of the combustion gas exhaust portion can be reduced. As a result, it is possible to solve a problem that a lower end of the water evaporator near the combustion gas exhaust portion is cooled by the water reserved in the combustion gas exhaust portion.

The hydrogen generator may further comprise a width equalizing means for suppressing a variation in a width of the combustion gas passage to equalize the width over an entire region in a circumferential direction of the combustion gas passage. Since the width equalizing means of the combustion gas passage suppresses a variation in a flow rate in the circumferential direction of the combustion gas flowing in the combustion gas passage, the heat is transferred from the combustion gas uniformly in the circumferential direction of the reforming catalyst body without occurrence of non-uniform flow of the combustion gas.

By way of example, the width equalizing means may include a plurality of protrusions that have equal height and protrude from the third tubular wall element toward the first tubular wall element, and tip ends of the protrusions may be configured to contact the first tubular wall element. In this case, it is desirable to form the protrusions on the third tubular wall element such that the protrusions are arranged to be spaced a predetermined distance apart from each other in the circumferential direction of the third tubular wall element.

In another example, the width equalizing means may include a flexible rod element that is disposed to extend in a circumferential direction of the third tubular wall element and has an equal cross-section, the rod element being sandwiched between the first and third tubular wall elements. The rod element may be a round rod having an equal diameter. The first tubular wall element may be provided with a porous metal film on an outer peripheral surface thereof, and the water evaporator may have a water reservoir that is formed between the porous metal film and an inner peripheral surface of the second tubular wall element. With such a configuration, the porous metal film is immersed in the water which is supplied from a water supply means and is reserved in the water reservoir, and suctions up the water. The porous metal film containing the water suctioned-up increases an area of water evaporation. The porous metal film is heated by the combustion gas flowing in the combustion gas passage so that the water soaked into the porous metal film is evaporated into the steam efficiently.

By providing the porous metal film over an entire outer peripheral surface of the first tubular wall element, the water is evaporated uniformly in the circumferential direction.

The hydrogen generator may further comprise a tubular cover that is configured to cover the second tubular wall element and forms a double-walled pipe along with the second tubular wall element, wherein the reformed gas flowing out from the reforming catalyst body may be caused to flow in a tubular space which is a reformed gas passage between the second tubular wall element and the tubular cover. In such a configuration, since the second tubular wall element and the tubular cover are simply tubular, durability of the hydrogen generator improves. Particularly, since the second tubular wall element and the tubular cover may be constructed of seamless metal pipes without seam joints of welded portions in piping, the problem that the heat cycle of the DSS operation that starts-up and shuts-up every day negatively affects the welded portion does not arise.

The hydrogen generator may further comprise a flexible rod element disposed at a position of the reformed gas passage to extend in a circumferential direction of the second tubular wall element, and the rod element may be sandwiched between the second tubular wall element and the tubular cover.

Since the rod element causes the reformed gas to flow in the circumferential direction of the reforming catalyst body, non-uniform flow of the reformed gas in the circumferential direction in the reformed gas passage is inhibited. As a result, heat radiation from the reforming catalyst body is inhibited over the entire region in the circumferential direction.

The burner may be oriented to cause a flame to be emitted downward from the burner.

By emitting the flame from the burner downward, it is possible to avoid the fact that air injection holes or fuel gas injection holes are clogged with products (e.g., metal oxide) resulting from combustion of the gas mixture of fuel gas and air. Since the burner is disposed above the reforming catalyst body to be inverted 180 degrees, it is easily accessible during maintenance, and thus maintenance of the burner improves.

The hydrogen generator may further comprise a combustion tube configured to guide the combustion gas downward, wherein the combustion gas passage may include a first tubular combustion gas passage formed between the third tubular wall element and the first tubular wall element, and a second tubular combustion gas passage formed between the combustion tube and the third tubular wall element, and wherein the combustion gas flowing out from the combustion tube may be caused to flow into the first combustion gas passage through the second combustion gas passage. By using the first and second combustion gas passages, heat transfer characteristic of the combustion gas in the axial direction of the reforming catalyst body improves. The hydrogen generator may further comprise a second lid element that is disposed with a gap between the second lid element and an upper end of the third tubular wall element and is connected to the burner so as to close an upper end of the first tubular wall element; and a separating element that is disposed opposite to a lower end of the combustion tube and is configured to separate an interior of the third tubular wall element. The second lid element may be a flange portion formed at a base end portion of the combustion tube.

The hydrogen generator may further comprise a gas mixture promoting means configured to promote mixing of steam in an interior of the water evaporator with the feed gas supplied through the feed gas inlet.

By way of example, the gas mixture promoting means may include a porous metal portion having a number of pores through which the gas mixture flows. The mixing between the feed gas and the steam is promoted while the gas mixture is flowing through the pores of the porous metal portion. Furthermore, since the pores of the porous metal portion increases a surface area of heat transfer to evaporate the gas mixture flowing through the pores, heat transfer characteristic from the combustion gas to the gas mixture improves.

The hydrogen generator may further comprise an annular support element that is disposed between the first and second tubular wall elements and is configured to support the reforming catalyst body; a first annular separating plate disposed to cover an upper end of the water evaporator; and a boundary space defined by the support element and the first annular separating plate; wherein the gas mixture promoting means may include a hole formed on the first annular separating plate, and wherein the feed gas and the steam in the interior of the water evaporator may be caused to gather to the hole to be mixed, and may flow into the boundary space. When the feed gas and the steam mixed in the interior of the water evaporator are caused to flow into the first sub-space, they are caused to gather to the gas mixture injection hole and thus mixing of these gases is promoted.

The hydrogen generator may further comprise a second separating plate configured to divide the boundary space in two; a first sub-space defined by the first and second separating plates; and a second sub-space defined by the second separating plate and the support element, wherein the gas mixing promoting means may include a bypass passage connecting an interior of the first sub-space to an interior of the second sub-space. The bypass passage may include a first pipe extending radially outward of the second tubular wall element and a second pipe that is connected to the first pipe and extends in an axial direction of the second tubular wall element so as to pass through the second separating plate, desirably in the direction perpendicular to the first pipe. Thereby, the gas mixture is caused to gather into the bypass passage and mixing of the gas mixture is promoted. In addition, since the gas mixture changes its direction substantially 90 degrees when passing through the bypass passage, the gas mixture flows in disorder, which further promotes mixing.

The gas mixture may be caused to flow from the first sub-space into the bypass passage and to flow into the second sub-space toward an inner side of the second sub-space in a radial direction of the second sub-space. By injecting the gas mixture at a predetermined flow rate toward the center of the second sub-space, the gas mixture is supplied uniformly to the entire region in the circumferential direction of the second sub-space.

A fuel cell system of the present invention comprise the above-mentioned hydrogen generator; and a fuel cell configured to generate power using a reformed gas containing hydrogen that is supplied from the hydrogen generator.

### Effects of the Invention

In accordance with the present invention, since the tubular water evaporator and the tubular reforming catalyst body are disposed such that they are arranged in their axial directions and their center axes conform to each other, it is possible to obtain a hydrogen generator that achieves improved durability with respect to a heat cycle and a low cost by simplifying the structure of gas passages, and makes evaporation state of steam uniform, and a fuel cell system comprising the hydrogen generator.

### Brief Description of the Drawings

Fig. 1 is a cross-sectional view showing an internal construction of a hydrogen generator according to an embodiment 1;
Fig. 2 is an enlarged cross-sectional view of a region near an upper combustion gas inlet of the hydrogen generator according to the embodiment 1, showing a structure of a protrusion that protrudes from a third tubular wall element;
Fig. 3 is a perspective view of the third tubular wall element of the hydrogen generator of the embodiment 1, showing the structure of the protrusion that protrudes from the third tubular wall element;
Fig. 4 is an enlarged cross-sectional view of a region near a first combustion gas passage of the hydrogen generator according to the embodiment 1, showing a structure of a round rod disposed in the first combustion gas passage;
Fig. 5 is an enlarged cross-sectional view of a region near a combustion gas exhaust portion 33 of the hydrogen generator according to the embodiment 1, showing an alternative example of the combustion gas exhaust portion;
Fig. 6 is an enlarged cross-sectional view of a water evaporator of the hydrogen generator of the embodiment 1, showing a structure of a porous metal film;
Fig. 7 is a perspective view of an annular support element of the hydrogen generator according to the embodiment 1;
Fig. 8 is a cross-sectional view showing an internal construction of a hydrogen generator according to an embodiment 2;
Fig. 9 is a cross-sectional view showing an internal construction of a hydrogen generator according to an embodiment 3;
Fig. 10 is a perspective view of a bypass passage of the hydrogen generator according to the embodiment 3; and
Fig. 11 is a block diagram schematically showing a construction of a fuel cell system according to an embodiment 4.

### Explanation of Reference Numbers

- 10: hydrogen generator
- 11: first tubular wall element
- 12: second tubular wall element
- 13: water evaporator
- 14: reforming catalyst body
- 15: burner
- 16: third tubular wall element
- 17: fuel gas pipe
- 17i: fuel gas inlet
- 18: fuel gas pipe lid
- 19: fuel gas injection hole
- 20: air injection hole
- 21: air pipe
- 21i: air inlet
- 22: cylindrical cover
- 23: air buffer
- 24: lid element
- 25: gap
- 26A: first flame detecting means
- 26B: second flame detecting means
- 27: heat insulating material
- 30: first combustion gas passage
- 31: upper combustion gas inlet
- 32: combustion gas outlet
- 33: combustion gas exhaust portion
- 34: exhaust pipe
- 35: protrusion
- 36: first round rod
- 37: porous metal film
- 38: water reservoir
- 40: feed gas pipe
- 40i: feed gas inlet
- 41: water pipe
- 41i: water inlet
- 42: boundary
- 43: support element
- 44: reformed gas inlet
- 45: reformed gas passage
- 45A: reformed gas spiral passage
- 46: second round rod
- 47: reformed gas outlet
- 48: reformed gas exhaust pipe
- 49A: first temperature detecting means
- 49B: second temperature detecting means
- 50: combustion tube
- 50A: lower end of combustion tube
- 50B: upper end of combustion tube
- 50S: flange portion
- 51: separating element
- 52: lower combustion gas inlet
- 53: second combustion gas passage
- 54: first sub-space
- 55: second sub-space
- 56: bypass passage
- 57: first pipe
- 58: second pipe
- 59: third pipe
- 60: annular gap
- 61: passage separation
- 62: porous metal portion
- 63: boundary space
- 64: first separating plate
- 65: second separating plate
- 66: second gas mixture injection hole
- 70: first gas mixture injection hole
- 80: fuel cell
- 80a: anode
- 80c: cathode
- 81: air supply device
- 82: cathode air pipe
- 83: shift converter
- 84: purifier
- 85: off gas pipe
- 100: fuel cell system
- 101: common center axis

### Best Mode for Carrying Out the Invention

Hereinafter, embodiments of the present invention will be described with reference to the drawings.

### (Embodiment 1)

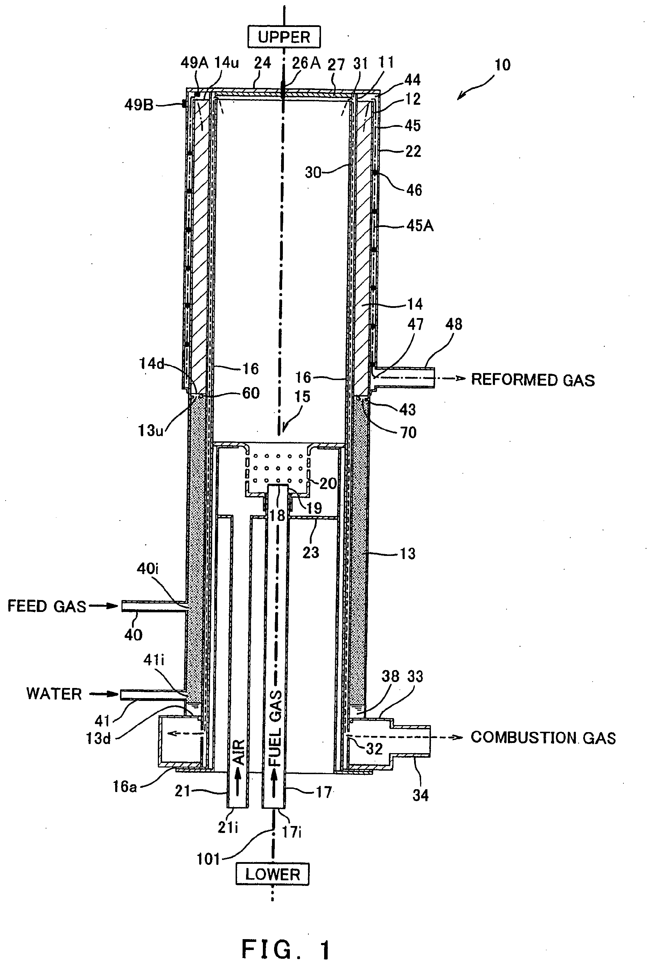

Fig. 1 is a cross-sectional view showing an internal construction of a hydrogen generator according to an embodiment 1 of the present invention.

In the embodiment 1, in Fig. 1, "upper" and "lower" are illustrated, a vertical direction of a cylindrical hydrogen generator 10 is an axial direction, a direction along a circle around a center axis of the hydrogen generator 101 is a circumferential direction, and a direction along a radius of the circle is a radial direction (these directions are the same in embodiments 2 and 3).

The hydrogen generator 10 mainly includes a first tubular wall element 11 and a second tubular wall element 12 which are constructed of seamless cylinders made of stainless steel, and form a double-walled pipe with a common center axis 101, a cylindrical water evaporator 13 that is formed in a cylindrical region (cylindrical space) between the first tubular wall element 11 and the second tubular wall element 12 so as to extend in an axial direction of the first and second tubular wall elements 11 and 12, a cylindrical platinum based reforming catalyst body 14 that is arranged with the water evaporator 13 in the axial direction and is formed in the cylindrical space between the first and second tubular wall elements 11 and 12, a third tubular wall element 16 that is inserted into the first tubular wall element 11 to a region near the upper end of the first tubular wall element 11 in the direction from the lower end of the first tubular wall element 11 and is coaxially provided with the first tubular wall element 11 so as to form a double-walled pipe with the first tubular wall element 11, a burner 15 formed at a lower region of the center of the interior of the third tubular wall element 16, and a cover 22 that is constructed of seamless cylinder made of stainless steel, covers an upper half portion of the second tubular wall element 12, and forms a double-walled pipe with the second tubular wall element 12, and a lid element 24 that is of a circular plate shape and is disposed to cover an entire surface of an upper end of the cylindrical cover 22.

As described later in detail, a gap (cylindrical space) between the third tubular wall element 16 and the first tubular wall element 11 is used as a first combustion gas passage 30 in which a combustion gas flows, and a gap (cylindrical space) between the second tubular wall element 12 and the cylindrical cover 22 is used as a reformed gas passage 45 in which a reformed gas flows.

In this embodiment, the water evaporator 13 and the reforming catalyst body 14 are disposed in such a manner that the center axis 101 of the water evaporator 13 and the center axis 101 of the reforming catalyst body 14 conform to the direction (axial direction) in which a gas mixture (gas mixture containing steam and feed gas) flows upward in the interior of the water evaporator 13, and the reforming catalyst body 14 is positioned on downstream side in a flow of the gas mixture in the interior of the water evaporator 13. That is, the water evaporator 13 is disposed under the reforming catalyst body 14.

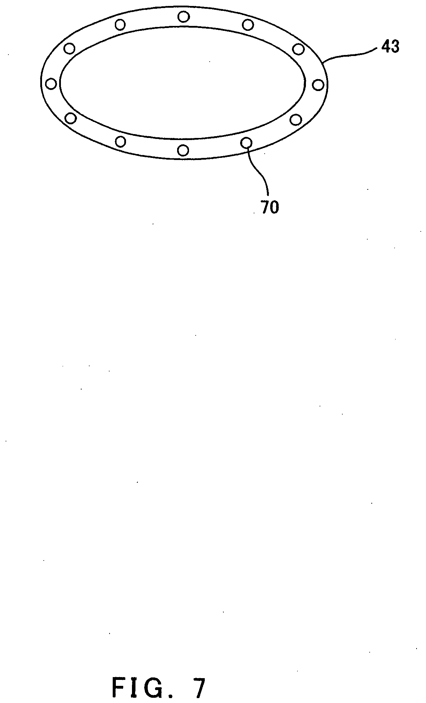

Furthermore, an annular support element 43 (see Fig. 7) is provided at a boundary between an upper end 13u of the water evaporator 13 and a lower end 14d of the reforming catalyst body 14 to protrude inward from an inner surface of the second tubular wall element 12 and is configured to support the reforming catalyst body 14.

Since the water evaporator 13 and the reforming catalyst body 14 are arranged in their axial direction such that the direction of the center axis 101 of the water evaporator 13 and the direction of the center axis 101 of the reforming catalyst body 14 conform to each other, the gas mixture flowing upward in the interior of the water evaporator 13 is smoothly guided from the water evaporator 13 to the reforming catalyst body 14 in one direction (axial direction), and intricate gas passages formed by piping work such as welding are reduced so that durability of the hydrogen generator 10 with respect to the heat cycle of the DSS operation is improved and a manufacturing cost of the hydrogen generator 10 is reduced.

In addition, since the water evaporator 13 and the reforming catalyst body 14 are arranged in their axial direction, it becomes possible to adopt an inner diameter of the water evaporator 13 which is suitable for uniform evaporation in the water evaporator 13 without increasing the inner diameter of the water evaporator 13.

Since the water evaporator 13 is disposed under the reforming catalyst body 14, only the steam is supplied to the reforming catalyst body 14. As a result, degradation of the reforming catalyst body 14 which may be caused by flowing water droplets from the water evaporator 13 to the reforming catalyst body 14 is inhibited.

Hereinafter, components of the hydrogen generator 10 will be sequentially described. A first flame detecting means 26A (e.g., thermocouple) is disposed in the vicinity of the center of the lid element 24 to be opposed to the burner 15. The first flame detecting means 26A detects whether or not a combustible gas is being combusted. In such a construction, the first flame detecting means 26A is easily attached to the lid element 24, and is capable of detecting a condition of the flame with high accuracy.

A first temperature detecting means 49A (e.g., thermocouple) is inserted into a reformed gas passage region in the vicinity of the upper end 14u of the reforming catalyst body 14, and a second temperature detecting means 49B (e.g., thermocouple) is attached to an outer surface of the cylindrical cover 22.

More specifically, the first temperature detecting means 49A is positioned in the vicinity of a reformed gas inlet 44 to directly detect the temperature of the reformed gas that has just flowed from the reforming catalyst body 14.

The first temperature detecting means 49A is capable of accurately detecting the temperature of the reforming catalyst body 14 which varies with time, and is maintained easily by opening the lid element 24.

The second temperature detecting means 49B is attached to the outer surface of the cylindrical cover 22 to detect the temperature of the cylindrical cover 22 in the vicinity of the reformed gas inlet 44. As a matter of course, the second temperature detecting means 49B may be omitted.

The second temperature detecting means 49B is easily attached and maintenance of the second temperature detecting means 49B improves..

According to detection signals output from the detecting means 26A, 49A, and 49B, a controller (not shown) controls the temperature of the hydrogen generator 10 properly.

The lid element 24 is provided with a heat insulating material 27 such as aluminum oxide, silicon oxide or titanium oxide which is opposed to the burner 15. This makes it possible to inhibit heat radiation from the interior of the third tubular wall element 16.

The water evaporator 13 is provided with a feed gas pipe 40 through which a feed gas fed from a material feed portion (not shown) is guided to a feed gas inlet 40i of the water evaporator 13 and a water pipe 41 through which water supplied from a water supply means (not shown) is guided to a water inlet 41i of the water evaporator 13. The burner 15 is provided with a fuel gas pipe 17 through which a fuel gas which is an off gas of the fuel cell (not shown) is guided to a flame region of the burner 15, and an air pipe 21 through which the air supplied from the air supply portion (not shown) is guided to the flame region of the burner 15.

In order to guide the combustion gas flowing in the first combustion gas passage 30 to atmosphere through combustion gas outlets 32 formed in the vicinity of the lower end of the first tubular wall element 11, a combustion gas exhaust portion 33 is provided around the region in the vicinity of the lower end of the first tubular wall portion 11, and an exhaust pipe 34 is provided at a predetermined position from the combustion gas exhaust portion 33 to protrude radially outward.

More specifically, the combustion gas outlets 32 which are openings arranged uniformly in the circumferential direction on the first tubular wall element 11. The combustion gas exhaust portion 33 is connected to the first tubular wall element 11 to cover the combustion gas outlets 32 and to extend over the entire circumference of the first tubular wall element 11. The cylindrical exhaust pipe 34 is connected to the combustion gas exhaust portion 33 and protrudes radially outward.

A reformed gas exhaust pipe 48 is provided at a predetermined position of the cylindrical cover 22 and configured to protrude radially outward to guide the reformed gas flowing in the reformed gas passage 45 to downstream side through a reformed gas outlet 47 formed in the vicinity of the lower end of the cylindrical cover 22.

More specifically, the reformed gas outlet 47 which is an opening is formed on the cylindrical cover 22, and the reformed gas exhaust pipe 48 is connected to the cylindrical cover 22 so as to cover the reformed gas outlet 47 and to protrude radially outward.

A region surrounded by the first and second tubular wall elements 11 and 12, the support element 43 and an upper wall of the combustion gas exhaust portion 33 functions as a space inside the water evaporator 13 in which a gas mixture is filled. A region surrounded by the first and second tubular wall elements 11 and 12, the support element 43, and the lid element 24 of a disc plate shape functions as a space in which the reforming catalyst body 14 is filled.

Subsequently, a detailed construction of the hydrogen generator 10 associated with the fuel gas passage will be described.

As shown in Fig. 1, the inner diameter of the third tubular wall element 16 is smaller than the inner diameter of the first tubular wall element 11 so that the first combustion gas passage 30 including a cylindrical gap is formed between the third tubular wall element 16 and the first tubular wall element 11. The third tubular wall element 16 is inserted into the interior of the first tubular wall element 11 in the direction from the lower end of the first tubular wall element 11 with the cylindrical gap between the first and third tubular wall elements 11 and 16 in assembly. With the third tubular wall element 16 inserted into the first tubular wall element 11 and fixed thereto such that their center axes 101 conform to each other, the upper end of the first tubular wall element 11 is closed by the lid element 24 with a gap between the upper end of the third tubular wall element 16 and the lid element 24. The gap corresponds to an upper combustion gas inlet 31 described later. When the third tubular wall element 16 is inserted, it is axially positioned in such a manner that an annular flange portion 16a at the lower end of the third tubular wall element 16 is abuts against a lower wall of the combustion gas exhaust portion 33 with a packing (not shown) provided between them. The first tubular wall element 11 is fixed in such a manner that its upper end is abuts against the lid element 24 and its lower end is abuts against the lower wall of the combustion gas exhaust pipe 33 with a packing (not shown) provided between them. Since the first tubular wall element 11 and the third tubular wall element 16 are each constructed of a seamless metal pipe extending from a region in the vicinity of the upper end 14u of the reforming catalyst 14 to a region in the vicinity of the lower end 13d of the water evaporator 13, the first combustion gas passage 30 extends from the region in the vicinity of the upper end 14u of the reforming catalyst body 14 to the region in vicinity of the lower end 13d of the water evaporator 13. Subsequently, a detailed construction of the hydrogen generator 10 associated with the mixture gas passage and the reformed gas passage will be described.

As shown in Fig. 1, the gas mixture in the interior of the water evaporator 13 flows into the reforming catalyst body 14 through a plurality of gas mixture injection holes 70 that are positioned at a boundary between the upper end 13u of the water evaporator 13 and the lower end 14d of the reforming catalyst body 14 and are formed on the support element (separating plate) 43 supporting the reforming catalyst body 14. The first gas mixture injection holes 70 of the support element 43 are a plurality of circular holes (diameter: about 1mm) arranged in the circumferential direction of the support element 43 shown in Fig. 7 to be spaced a predetermined distance apart from each other. Thereby, the gas mixture is supplied to the reforming catalyst body 14 uniformly in the circumferential direction thereof.

As shown in Fig. 1, the support element 43 is connected at an outer periphery thereof to the second tubular wall element 12 and is supported at one end thereof by the second tubular wall element 12. An annular gap 60 is formed between an inner periphery of the support element 43 and the first tubular wall element 11. The gas mixture also flows from the water evaporator 13 to the reforming catalyst body 14 through the annular gap 60. Alternatively, the support element 43 may be supported at one end thereof by the first tubular wall element 11 instead of the second tubular wall element 12, or otherwise may be supported at both ends thereof by the first and second tubular wall elements 11 and 12. The shape of the first gas mixture injection holes 70 is not intended to be a circle in a limited way, but may be elongated circle, an oval, a rectangle, etc.

In an alternative example of the support element 43, one gas mixture injection hole (not shown) may be formed in the circumferential direction of the support element 43 instead of the plurality of first gas mixture injection holes 70. By providing one gas mixture hole, the feed gas and the steam in the interior of the water evaporator 13 gather and are mixed in this gas mixture injection hole when flowing into the reforming catalyst body 14, thereby allowing mixing of the gas mixture to promote, although there arises a need to supply the gas mixture to the reforming catalyst body 14 uniformly in the circumferential direction.

The reformed gas emitted from an axial end of the reforming catalyst body 14 flows into the reformed gas passage 45 formed between the second tubular wall element 12 and the cylindrical cover 22 through the reformed gas inlet 44 corresponding to an annular gap formed between the upper end of the second tubular wall element 12 and the lid element 24. More specifically, the inner diameter of the second tubular wall element 12 is smaller than the inner diameter of the cylindrical cover 22, and thereby the reformed gas passage 45 comprised of a cylindrical gap is formed between the second tubular wall element 12 and the cylindrical cover 22. The second tubular wall element 12 is inserted into the interior of the cylindrical cover 22 with the cylindrical gap in assembly. With the second tubular wall element 12 inserted into the cylindrical cover 22 with their center axes 101 conforming to each other, the upper end of the cylindrical cover 22 is closed by the lid element 24 with a gap between the upper end of the second tubular wall element 12 and the lid element 24. In this manner, the annular gap which is the reformed gas inlet 44 and the cylindrical gap which is the reformed gas passage 45 are formed. A second round rod 46 is disposed in a gap between the second tubular wall element 12 and the cylindrical cover 22. The flexible second round rod 46 is wound around the second tubular wall element 12. The second round rod 46 is in contact with (sandwiched between) the second tubular wall element 12 and the cylindrical cover 22 to form a spiral reformed gas passage 45A (reformed gas circumferential moving means) in the reformed gas passage 45. The cylindrical cover 22 is constructed of a seamless metal pipe which is made of stainless steel and extends from the region in vicinity of the upper end 14u of the reforming catalyst body 14 to the region in vicinity of the lower end 14d of the reforming catalyst body 14.

The flow operations of the combustion gas, the gas mixture, and reformed gas in the hydrogen generator 10 constructed as described above will be sequentially described. The fuel gas is supplied from a fuel gas inlet 17i connected to a passage (not shown) of the fuel gas (e.g., off gas of the fuel cell) and is guided to the fuel gas pipe 17. Then, the fuel gas flows upward toward the burner 15 through the fuel gas pipe 17. The further upward flow of the fuel gas is blocked by a fuel gas pipe lid 18 that seals a downstream end of the fuel gas pipe 17, and therefrom, the fuel gas is injected to the flame region of the burner 15 through a plurality of fuel gas injection holes 19 which are provided on the side surface of the fuel gas pipe 17 and located in the vicinity of the fuel gas pipe lid 18. Air for combustion is supplied from the air inlet 21i connected to the air supply means (not shown) and moves upward toward the burner 15 through the air pipe 21. The air is supplied to an interior of an air buffer 23 that is provided around the fuel gas pipe 17 in the vicinity of the downstream end of the fuel gas pipe 17 and is constructed of an annular hollow body that is recessed substantially at the center. The air is injected from the air buffer 23 to the flame region of the burner 15 through a plurality of air injection holes 20 formed on the inner side surface of the concave portion. The combustible gas is combusted to generate the high-temperature combustion gas in the interior of the burner 15 while maintaining the combustible gas in the gas mixture containing the fuel gas and the air that are guided to the flame region of the burner 15 at a concentration at which the combustible gas is able to be combusted.

As indicated by a dotted line in Fig. 1, the combustion gas is exhausted to outside through the third tubular wall element 16 and the first combustion gas passage 30.

The combustion gas generated in the burner 15 flows upward in the interior of the third tubular wall element 16, and further upward flow of the combustion gas is blocked by the lid element 24 disposed with the gap corresponding to the annular upper combustion gas inlet 31 between the upper end of the third tubular wall element 16 and the lid element 24. The combustion gas diffuses radially along the lid element 24, and is guided to the first cylindrical combustion gas passage 30 through the upper combustion gas inlet 31. Thereafter, the combustion gas exchanges heat with the reforming catalyst body 14 to transfer heat for the reforming reaction to the reforming catalyst body 14 while flowing downward in the first combustion gas passage 30. Thereafter, the combustion gas exchanges heat with the water in the interior of the water evaporator 13 to transfer heat for water evaporation to the water. An upper half portion of the third tubular wall element 16 also functions as a combustion tube, and transfers heat to the reforming catalyst body 14 by heat radiation. The combustion gas that has exchanged heat with the water in the interior of the water evaporator 13 flows from the combustion gas outlets 32 to the combustion gas exhaust portion 33. The combustion gas flows through the combustion gas exhaust portion 33 and is exhausted to outside in the air through the exhaust pipe 34. The gas mixture containing the feed gas and the steam flows out from the water evaporator 13 into the reforming catalyst body 14 as follows. The feed gas that is fed to the feed gas inlet 40i connected to the material feed means is guided to the water evaporator 13 through the feed gas pipe 40. The water that is supplied to the water inlet 41i connected to the water supply means is guided to the water evaporator 13 through the water pipe 41. The water of a predetermined amount is supplied to and reserved in the water reservoir 38 of the water evaporator 13. The water receives heat from the combustion gas by heat exchange with the combustion gas through the first tubular wall element 11 and is thereby evaporated into steam. The steam and the feed gas are mixed in the interior of the water evaporator 13, and the resulting gas mixture flows axially upward in the water evaporator 13 and flows into the reforming catalyst body 14 through the plurality of first gas mixture injection holes 70 formed on the support element (separating plate) 43. The gas mixture is converted into a reformed hydrogen-rich gas through the reforming reaction while flowing through the reforming catalyst body 14.

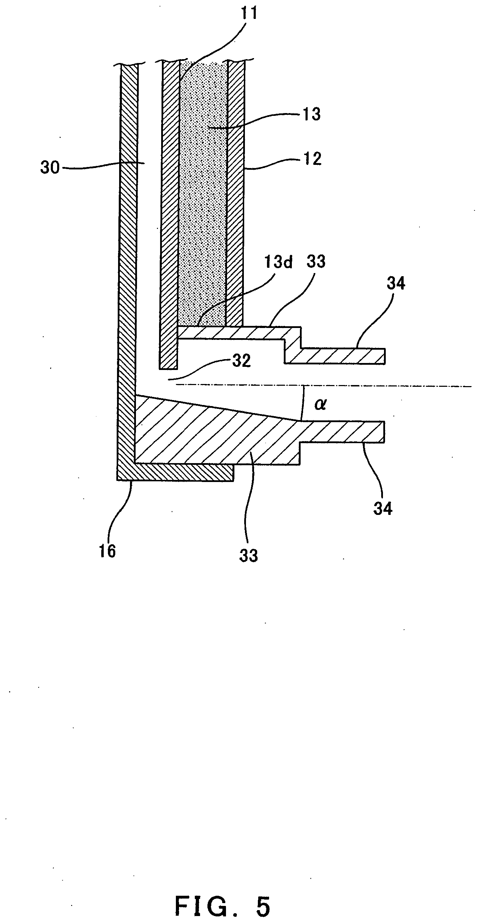

As indicated by a one-dotted line in Fig. 5, the reformed gas flows from the reforming catalyst body 14 to downstream side through the reformed gas passage 45.

To be specific, the reformed gas generated by reforming the gas mixture in the reforming catalyst body 14 flows upward inside the reforming catalyst body 14, and further upward flow of the reformed gas is blocked by the lid element 24. The reformed gas diffuses radially along the lid element 24 and is guided to the reformed gas passage 45 through the reforming gas inlet 44. Thereafter, the reformed gas is caused to move in the circumferential direction of the reforming catalyst body 14 along the second round rod 46 (rod element) while being guided downward through the spiral passage 45A.

After flowing in the reformed gas passage 45, the reformed gas flows into the reformed gas exhaust pipe 48 through the reformed gas outlet 47. The reformed gas flows to downstream side through the reformed gas exhaust pipe 48.

In accordance with the hydrogen generator 10, since the first, second and the third tubular wall elements 11, 12, and 16 and the cylindrical cover 22 are simple in shape, i.e., cylindrical, durability of the hydrogen generator 10 improves. In particular, since the first, second, and the third tubular wall elements 11, 12, 16, and the cylindrical cover 22 are constructed of metal pipes made of stainless steel and are not provided with seam joints such as the welded portion, the problem that the heat cycle of the DSS operation in which the fuel cell starts-up and shuts-down every day negatively affects the welded portion does not arise. Furthermore, since the entire surface of the reforming catalyst body 14 in the circumferential direction from the upper end 14u to the lower end 14d is contact with the combustion gas flowing in the first combustion gas passage 30 with the first tubular wall element 11 interposed between them, reaction heat necessary for the reforming reaction is efficiently transferred from the combustion gas to the reforming catalyst body 14. In addition, since the entire surface of the water evaporator 13 in the circumferential direction from the upper end 13u to the lower end 13d is in contact with the combustion gas flowing in the first combustion gas passage 30 with the first tubular wall element 11 interposed between them, evaporation heat is efficiently transferred from the combustion gas to the water in the interior of the water evaporator 13. Furthermore, since the first combustion gas passage 30 is disposed inward of the first tubular wall element 11, heat radiation from the combustion gas flowing in the first combustion gas passage 30 is inhibited.

Moreover, since the reformed gas is caused to move in the circumferential direction of the reforming catalyst body 14, non-uniform flow of the reformed gas in the circumferential direction is inhibited, and thus heat radiation from the reforming catalyst body 14 is inhibited over the entire region in the circumferential direction of the reforming catalyst body 14. Hereinbelow, several alternative examples that improve heat transfer characteristics of the combustion gas to the reforming catalyst body 14 and/or the water evaporator 13 will be described with reference to the drawings.

### [First Alternative Example]

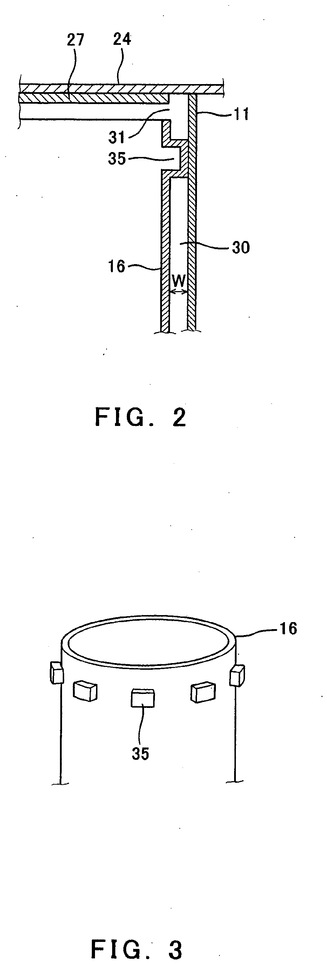

A first alternative example is such that protrusions 35 which are a width equalizing means for equalizing a width W of the first combustion gas passage 30 are formed on the surface of the third tubular wall element 16 by embossing. As illustrated by an enlarged cross-sectional view of Fig. 2, showing the region in the vicinity of the upper combustion gas inlet 31, the plurality of protrusions 35 with an equal height are formed by embossing the third tubular wall element 16 to protrude toward the first tubular wall element 11, and their tip ends are in contact with the first tubular wall element 11. Thereby, the variation in the width W of the first gas passage 30 is suppressed by the height of protrusions 35. So, the protrusions 35 allow the width W of the combustion gas passage 30 to be equalized in the circumferential direction thereof. To be specific, as illustrated by the perspective view of the third tubular wall element 16 of Fig. 3, the plurality of protrusions 35 with an equal height are formed on the third tubular wall element 16 to be spaced a predetermined distance apart from each other in the circumferential direction. While the protrusions 35 are formed by embossing the third tubular wall element 16, similar protrusions may alternatively be formed by embossing the first tubular wall element 11. In accordance with the means for equalizing the width (protrusions 35) of the first combustion gas passage 30, the variation in the flow rate in the circumferential direction of the combustion gas flowing in the first combustion gas passage 30 is suppressed. As a result, non-uniform flow of the combustion gas does not occur, and thereby, the heat from the combustion gas which is necessary for the reforming reaction is transferred to the reforming catalyst body 14 uniformly in the circumferential direction thereof.

### [Second Alternative Example]

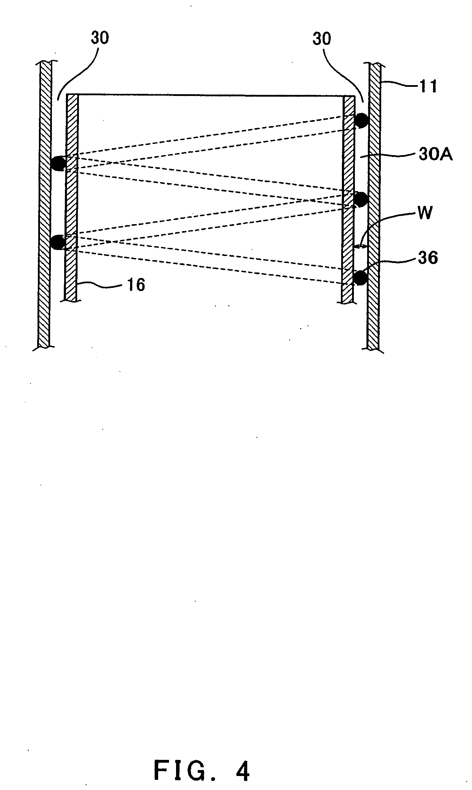

A second alternative example is such that a first flexible round rod (rod element) 36 having an equal diameter (equal cross-section) is wound around the third tubular wall element 16 as the means for equalizing the width W of the first combustion gas passage 30. As illustrated by an enlarged cross-sectional view showing a region in the vicinity of the first combustion gas passage 30 of Fig. 4, the first round rod 36 is in contact with the third tubular wall element 16 and the first tubular wall element 11(or sandwiched between the third tubular wall element 16 and the first tubular wall element 11) such that the width W of the first combustion gas passage 30 is equal to the diameter of the first round rod 36. Thereby, the variation in the width W of the combustion gas passage 30 is suppressed by the first round rod 36, and thus the width W of the first combustion gas passage 30 is equalized in the circumferential direction thereof. In addition, a spiral passage 30A is formed in the first combustion gas passage 30 by winding the first round rod element 36 in spiral-shape around the third tubular wall element 16 over an axial predetermined distance of the third tubular wall element 16. The combustion gas is caused to flow along the first round rod 36 in the interior of the spiral passage 30A. In accordance with the means for equalizing the width W of the first combustion gas passage 30 (first round rod 36), the variation in the flow rate in the circumferential direction of the combustion gas flowing in the first combustion gas passage 30 is reduced. As a result, non-uniform flow of the combustion gas does not occur, and thereby, the heat is transferred from the combustion gas to the reforming catalyst body 14 uniformly in the circumferential direction thereof. In addition, since the combustion gas is caused to flow in the circumferential direction along the first round rod 36 in the combustion passage 30, heat is transferred from the combustion gas to the reforming catalyst body 14 more uniformly in the circumferential direction.

### [Third Alternative Example]

A third alternative example is such that the combustion gas exhaust portion 33 for guiding the combustion gas flowing out from the combustion gas outlets 32 is tilted downward. As illustrated by an enlarged cross-sectional view showing the region in the vicinity of the combustion gas exhaust portion 33 of Fig. 5, an inner surface of a lower wall of the combustion gas exhaust portion 33 is tilted downward to at a predetermined angle *α* with respect to the radial direction of the first tubular wall element 11. By tilting the inner surface of the lower wall of the combustion gas exhaust portion 33 downward, water droplets that may be generated by condensation of the steam contained in the combustion gas are discharged to outside together with the combustion gas, thus reducing the water reserved in the interior of the combustion gas exhaust portion 33. As a result, the problem that the lower end 13d of the water evaporator 13 which is near the combustion gas exhaust portion 33 is cooled by the water reserved in the combustion gas exhaust portion 33 does not arise.

### [Fourth Alternative Example]

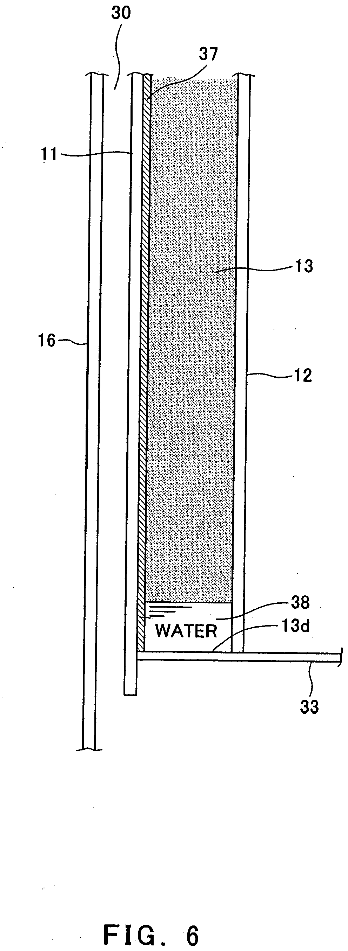

A fourth alternative example is such that a porous metal film 37 comprised of a porous metal thin film (approximately 0.5mm) is provided on an outer peripheral surface of a region of the first tubular wall element 11 that is located at the water reservoir 38. Specifically, as illustrated by an enlarged cross-sectional view (Fig. 6) showing the region in the vicinity of the lower end 13d of the water evaporator 13, the porous metal film 37 is provided on the outer peripheral surface (surface defining the water evaporator 13) of the first tubular wall element 11 to extend over a predetermined distance above from the water reservoir 38 at the lower end 13d. Thereby, the water evaporator 38 is formed between the porous metal membrane 37 and the inner peripheral surface of the second tubular wall element 12.

In such a construction, the porous metal membrane 37 is immersed in the water that is supplied from the water supply means and reserved in the water reservoir 38, and suctions up the water. The porous metal membrane 37 containing the water suctioned-up increases the area of water evaporation. Since the combustion gas flowing in the combustion gas passage 30 heats the entire surface of the porous metal membrane 37, the water soaked into the porous metal membrane 37 is evaporated into steam efficiently.

### (Embodiment 2)

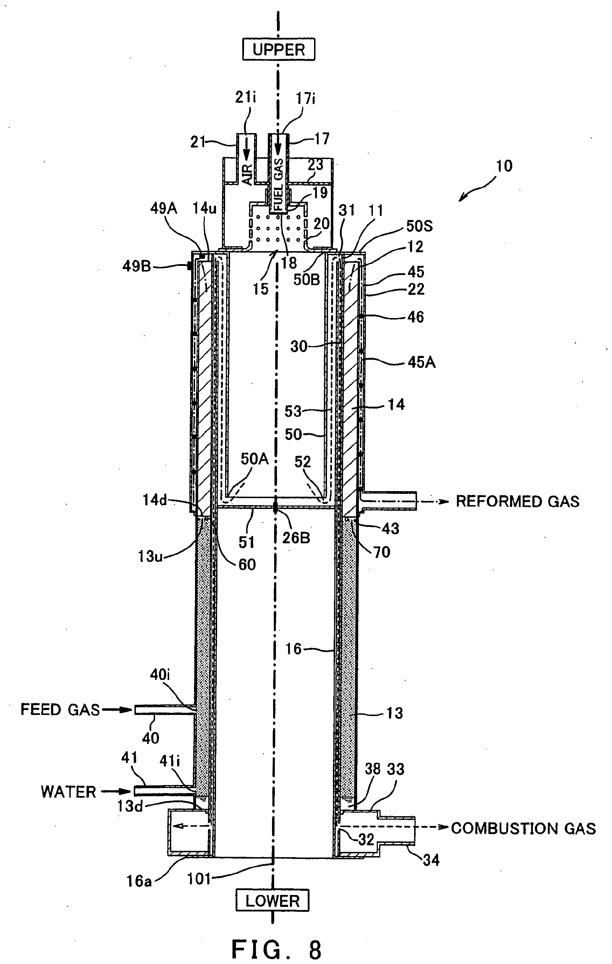

Fig. 8 is a cross-sectional view showing an internal construction of a hydrogen generator according to an embodiment 2 of the present invention.

Since the structures of the first and second tubular wall elements 11 and 12, the water evaporator 13, the reforming catalyst body 14, and the cylindrical cover 22 in the embodiment 2 are identical to those of the embodiment 1, they will not be further described.

While in the embodiment 1, the burner 15 is inserted into the interior of the first tubular wall element 11 in the direction from the lower side to the upper side of the first tubular wall element 11 so that the flame is emitted upward (toward upper side in Fig. 1) from the burner 15 in this embodiment 2, it is disposed at an upper end of the first tubular wall element 11 to be inverted 180 degrees so that the flame emitted from the burner 15 is oriented downward.

Hereinbelow, the construction of the embodiment 2 will be described regarding the placement of the burner 15.

Turning to Fig. 8, the lid element 24 is omitted, and a combustion tube 50 is inserted into the interior of the third tubular wall element 16 from the upper end as compared to the construction of Fig. 1. A lower end 50A of the combustion tube 50 is positioned in the vicinity of the center in the axial direction of the first tubular wall element 11 (third tubular wall element 16) (in the vicinity of the lower end 14d of the reforming catalyst body 14). The combustion tube 50 is axially positioned by contacting an annular flange portion 50S (flange) formed at a base end portion (upper end 50B) of the combustion tube 50 with the first tubular wall element 11 or the upper end of the cylindrical cover 22. In addition, the flange portion 50S covers the upper end of the hydrogen generator 10 surrounded by the cylindrical cover 22 except for an inner region of the combustion tube 50. The flange portion 50S functions as the lid element 24 of the embodiment 1, i.e., the lid element provided to close the upper ends of the first, second, and third tubular wall elements 11, 12, and 16. The burner 15 is connected to the flange portion 50S.

A separating element 51 of a circular plate shape is disposed in the vicinity of the lower end 50A of the combustion tube 50 to be opposed to the lower end 50A of the combustion tube 50. The separating element 51 blocks the lower side of the combustion tube 50 to separate the interior of the third tubular wall element 16. A cylindrical gap between the combustion tube 50 and the third tubular wall element 16 serves as a second combustion gas passage 53, and a cylindrical gap between the third tubular wall element 16 and the first tubular wall element 11 serves as a first combustion gas passage 30. More specifically, the inner diameter of the combustion tube 50 is smaller than the inner diameter of the third tubular wall element 16, and thereby the second combustion gas passage 53 comprised of the cylindrical gap is formed between the combustion tube 50 and the third tubular wall element 16. The combustion tube 50 is inserted into the interior of the third tubular wall element 16 from the upper end thereof with the cylindrical gap in assembling. With the combustion tube 50 inserted into the third tubular wall element 16 such that directions of their center axes 101 conform to each other, the separating element 51 of the circular plate shape is disposed with a gap between the separating element 51 and the lower end 50A of the combustion tube 50. The annular gap corresponds to a lower combustion gas inlet 52. The structure of the first combustion gas passage 30 is identical to that of the embodiment 1, and therefore will not be described in detail. In the hydrogen generator 10 constructed above, the third tubular wall element 16 inserted into the region between the combustion tube 50 and the first tubular wall element 11 causes the combustion gas path to be bent in substantially U-shape at the upper combustion gas inlet 31 in the direction from the second combustion gas passage 53 to the first combustion gas passage 30. A second flame detecting means (e.g., thermocouple) 26B is disposed substantially at the center of the separating element 51 to be opposed to the burner 15. The second flame detecting means 26B detects whether or not the combustible gas is being combusted. In such a configuration, the second flame detecting means 26B is easily attached to the separating element 51. The second flame detecting means 26B is capable of accurately detecting a flame condition of the burner 15.

Subsequently, how the combustion gas generated in the burner 15 flows and transfers heat to the reforming catalyst body 14 and the water evaporator 13 will be described. The operation for supplying the fuel gas and the air to the burner 15 is identical to that of the embodiment 1, and will not be described. The combustible gas in the gas mixture containing the fuel gas and the air that are guided to the flame region of the burner 15 is maintained at a concentration at which the combustible gas is able to be combusted to generate a high-temperature combustion gas. As shown by a dotted line of Fig. 8, the combustion gas flows downward in the interior of the combustion tube 50, through the lower combustion gas inlet 52, the second combustion gas passage 53 formed between the combustion tube 50 and the third tubular wall element 16, and the upper combustion gas inlet 31, and is exhausted to outside through the first combustion gas passage 30 formed between the third tubular wall element 16 and the first tubular wall element 11.

More specifically, the combustion gas generated in the burner 15 flows downward in the interior of the combustion tube 50, and further downward flow is blocked by the separating element 51 disposed with the gap between the lower end 50A of the combustion tube 50 and the separating element 51. The combustion gas diffuses radially along the separating element 51 and is guided to the interior of the cylindrical second combustion gas passage 53 through the annular lower combustion gas inlet 52. Thereafter, the heat is transferred from the combustion gas to the reforming catalyst body 14 to enable an endothermic reforming reaction to occur, through the first tubular wall element 11, the first combustion gas passage 30, and the third tubular wall element 16 while being guided upward through the second combustion gas passage 53. For example, the reforming catalyst body 14 is heated by transferring radiation heat from the third tubular wall element 16 heated by the combustion gas. The further upward flow of the combustion gas flowing in the interior of the second combustion gas passage 53 is blocked by the flange 50S disposed with the gap between the flange 50S and the upper end of the third tubular wall element 16. Then, the combustion gas diffuses radially along the flange portion 50S and is guided to the interior of the first combustion gas passage 30 through the annular upper combustion gas inlet 31.

The first and second combustion gas passages 30 and 53 are provided, and the combustion gas is caused to flow upward in the interior of the second combustion gas passage 53 from the region in the vicinity of the lower end 14d of the reforming catalyst body 14 to the region in the vicinity of the upper end 14u of the reforming catalyst body 14 and is caused to flow downward in the interior of the first combustion gas passage 30 from the region in the vicinity of the upper end 14u of the reforming catalyst body 14 to the region in vicinity of the lower end 14d of the reforming catalyst body 14.

Thereafter, the combustion gas flowing in the first combustion gas passage 30 is exhausted to outside the hydrogen generator 10 through the path described in the embodiment 1.

The flow of the gas mixture and the flow of the reformed gas are identical to those of the embodiment 1, and will not be further described.

As should be appreciated from the foregoing, since the flame is emitted downward from the burner 15, substances (e.g., metal oxide) which may result from combustion of the gas mixture containing the fuel gas and the air are deposited on the separating element 51, and thus does not clog the air injection holes 20 and the fuel gas injection hole 19 of the burner 15.

Since the burner 15 is installed above the reforming catalyst body 14 so as to be inverted 180 degrees, it is easily accessible during maintenance. So, maintenance of the burner 15 improves.

In a case where the flame is emitted downward from the burner 15 (downward flame emission), a range of desired combustion characteristic of the burner 15 can be increased even when flame combustion amount of the burner 15 is small, as compared to a case where the flame is emitted upward from the burner 15 (upward flame emission). This is associated with the fact that the flame or the high-temperature combustion gas tends to flow upward in the combustion space of the burner 15 by a buoyancy based on density difference between these gases and the air.

In the upward flame emission of the burner 15, the flame or the combustion gas moves upward by the buoyancy away from the air injection holes 20 of the burner 15 or the fuel gas pipe lid 18, while in the downward flame emission, the flame or the combustion gas moves upward by the buoyancy closer to the air injection holes 20 or the fuel gas pipe lid 18. The downward flame emission of the burner 15 enables the temperature of the burner 15 to become higher than that of the upward flame emission. When the temperature of the burner 15 is higher, the combustion portion of the burner 15 is inevitably maintained at a high temperature. As a result, desired combustion characteristic is achieved.

In a case where the combustion amount of the burner 15 is small and thereby the temperature of the burner 15 is likely to decrease, there arises a difference in combustion characteristic between the upward flame emission and downward flame emission.

If the air supply amount becomes unstable due to some causes, for example, disturbance by strong wind or the like and the combustion amount of the burner 15 decreases, it is advantageous that the downward flame emission of the burner 15 is adopted rather than the upward flame emission of the burner 15, because the exhaust amount of CO or THC in the exhaust gas is suppressed and thereby stability of the combustion of the burner 15 is improved.

Since the first and second combustion gas passages 30 and 53 are provided so that the combustion gas is caused to flow upward and then downward in the axial direction of the reforming catalyst body 14, heat transfer characteristic of the combustion gas in the axial direction of the reforming catalyst body 14 is improved.

To be specific, the temperature of the combustion gas is highest just after the combustion gas has flowed out from the combustion tube 50 (in the vicinity of the lower combustion gas inlet 52) and thereafter decreases while the combustion gas flows in the first and second combustion gas passages 30 and 53 while transferring heat required for the reforming reaction to the reforming catalyst body 14. As examples of the variation in the temperature of the combustion gas, the temperature of the combustion gas at the lower combustion gas inlet 52 is 1000°C and the temperature of the combustion gas at the upper combustion gas inlet 31 is 800°C. Under this condition, assuming that the first combustion gas passage 30 is omitted and the heat required for the reforming reaction is transferred only from the second combustion gas passage 53 to the reforming catalyst body 14, the temperature difference (200°C) in the combustion gas between the upper and lower combustion gas inlets 31 and 52 is directly reflected in the temperature difference between the upper end 14u of the reforming catalyst body 14 and the lower end 14d of the reforming catalyst body 14. As a result, temperature grading due to the temperature difference of the combustion gas occurs in the axial direction of the reforming catalyst body 14.

On the other hand, since the first and second combustion gas passages 30 and 53 are provided as in the embodiment 2, and the combustion gas is caused to flow upward in the second combustion gas passage 53 from the lower end 14d of the reforming catalyst body 14 to the upper end 14u of the reforming catalyst body 14, and to flow downward in the first combustion gas passage 30 from the upper end 14u of the reforming catalyst body 14 to the lower end 14d of the combustion catalyst body 14, the temperature grading which occurs in the second combustion gas passage 53 in the axial direction of the reforming catalyst body 14 is canceled by the temperature grading which occurs in the first combustion gas passage 30 in the axial direction of the reforming catalyst body 14. To be specific, in the vicinity of the lower end 14d of the reforming catalyst body 14, the combustion gas flowing in the second combustion gas passage 53 is on a high-temperature side, while the combustion gas flowing in the first combustion gas passage 30 is on a low-temperature side. Conversely, in the vicinity of the upper end 14u of the reforming catalyst body 14, the combustion gas flowing in the second combustion gas passage 53 is on a low-temperature side, while the combustion gas flowing in the first combustion gas passage 30 is on a high-temperature side. Because of the temperature difference in the combustion gas flowing in the passages 53 and 30, the temperature of the combustion gas flowing in the first combustion gas passage 30 is made uniform. Since the amount of heat transfer to the lower end 14d of the reforming catalyst body 14 which is lower in temperature than that of the embodiment 1 is increased and the amount of heat transfer to the upper end 14u which is higher in temperature than that of the embodiment 1 is decreased, the temperature of reforming catalyst body 14 is made uniform with smaller temperature grading in the axial direction of the reforming catalyst body 14. Therefore, the reforming catalyst body 14 is easily set to a desired temperature range (e.g., 550 to 650°C) and is thus effectively utilized. Thus, decrease in the amount of the reforming catalyst body 14 and local temperature increase in the reforming catalyst body 14 are inhibited. As a result, durability of the reforming catalyst body 14 improves.

### (Embodiment 3)

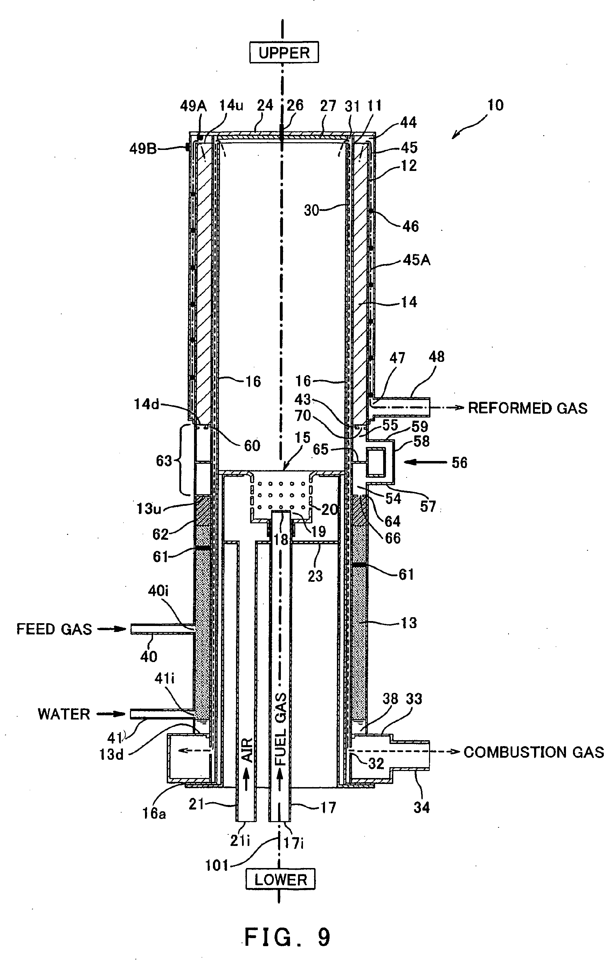

Fig. 9 is a cross-sectional view showing an internal construction of a hydrogen generator according to an embodiment 3 of the present invention.

In the embodiment 3, a configuration for improving a characteristic of the gas mixture containing the feed gas and the steam existing in the water evaporator 13 is added to the embodiment 1. A specific example is a gas mixing promoting means of the gas mixture, and will be described.

As shown in Fig. 9, in a cylindrical boundary space 63 between the first and second tubular wall elements 11 and 12 in a boundary region between the upper end 13u of the water evaporator 13 and the lower end 14d of the reforming catalyst body 14, a first separating plate 64 that has a single second gas mixture injection hole 66 and defines a boundary between the water evaporator 13 and the boundary space 63, a second separating plate 65 that divides the boundary space 63 into first and second sub-spaces 54 and 55, and a support element 43 that has a plurality of first gas mixture injection holes 70 and supports the reforming catalyst body 14 are disposed in this order in the direction from the water evaporator 13 toward reforming catalyst body 14.

A passage separation (passage forming portion) 61 is disposed in the interior of the water evaporator 13 in the vicinity of the first separating plate 64 to form a spiral passage. A porous metal portion 62, which is a porous metal element constructed of a thick film (having thickness approximately as large as the width of the water evaporator 13) is disposed in the vicinity of the first separating plate 64 to extend over an entire region in the width direction in the interior of the water evaporator 13. While the first separating plate 64 and the second separating plate 65 may be molded integrally with the first and second tubular wall elements 11 and 12, they may alternatively pressed into the cylindrical boundary space 63 between the first and second tubular wall elements 11 and 12 to form a simple separating configuration.

As shown in Fig. 9, the first separating plate 64 is constructed of an annular flat plate. The second gas mixture injection hole 66 (diameter: about 1mm) is formed at a position of the flat plate. The inner periphery of the first separating plate 64 is in contact with the first tubular wall element 11 and the outer periphery thereof is in contact with the second tubular wall element 12. A cylindrical region defined by the first and second tubular wall elements 11 and 12, and the first separating plate 64 and the upper wall of the combustion gas exhaust pipe 33 functions as the water evaporator 13. The shape of the second gas mixture injection hole 66 is not particularly limited, but may be other shapes such as a circle, an elongate circle, an oval and a rectangle.

As shown in Fig. 9, the separating plate 65 is constructed of the annular flat plate, and is disposed in the vicinity of substantially the center in the axial direction of the cylindrical boundary space 63 so as to divide the boundary space 63 in two. The inner periphery of the second separating plate 65 is in contact with the first tubular wall element 11 and the outer periphery thereof is in contact with the second tubular wall element 12. Thus, the first sub-space 54 is defined by the first and second tubular wall elements 11 and 12 and the first and second separating plates 64 and 65, and the second sub-space 55 is defined by the first and second tubular wall elements 11 and 12, the second separating plate 65 and the support element 43.

Since the structure of the support element 43 is identical to that described in the embodiment 1 (see Fig. 7), it will not be further described in detail.

Since the axial flow of the gas mixture moving from the first sub-space 54 toward the second sub-space 55 is blocked by the second separating plate 65, the gas mixture is guided from the first sub-space 54 to the second sub-space 55 through a bypass passage 56 described below.

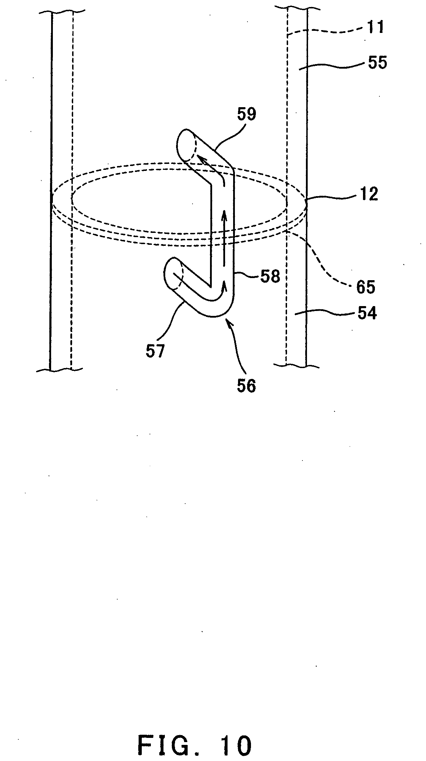

Fig. 10 is a perspective view of the bypass passage 56 as seen from a lateral side of the second tubular wall element 12.

As shown in Figs. 9 and 10, the bypass passage 56 includes a first pipe 57 extending radially outward from an outer peripheral surface of the second tubular wall element 12 so as to be connected to the interior of the first sub-space 54, a second pipe 58 extending from a tip end of the first pipe 57 to pass through the second separating plate 65 along the axial direction of the second tubular wall element 12, and a third pipe 59 extending radially inward from an upper end of the second pipe 58 to the outer peripheral surface of the second tubular wall element 12 so to be connected to the second sub-space 55.

Subsequently, an operation for guiding the gas mixture containing the feed gas and the steam from the interior of the water evaporator 13 to the reforming catalyst body 14 will be described. Since the flow operation of the combustion gas (see dotted line in Fig. 9) and the flow operation of the reformed gas (see one-dotted line in Fig. 9) are identical to those of the embodiment 1, they will not be further described.

The feed gas which is fed to the feed gas inlet 40i connected to the material feed means (not shown) is guided to the water evaporator 13 through the feed gas pipe 40, while the water which is supplied to the water inlet 41i connected to the water supply means (not shown) is guided to the water evaporator 13 through the water pipe 41. The water of a predetermined amount is reserved in the water reservoir 38 of the water evaporator 13. The water receives heat from the combustion gas through the first tubular wall element 11 by heat exchange and is thereby evaporated into the steam. The steam and the feed gas are mixed in the interior of the water evaporator 13, and the resulting gas mixture flows upward axially of the water evaporator 13 toward the reforming catalyst body 14.

Since the passage separation 61 is disposed in the interior of the water evaporator 13, the gas mixture flows upward toward the reforming catalyst body 14 while moving along the passage separation 61 in the circumferential direction in the interior of the water evaporator 13 in the vicinity of the first separating plate 64. The passage separation 61 allows a spiral passage to be formed in the interior of the water evaporator 13. The spiral passage causes the gas mixture to flow in the circumferential direction along the spiral passage in the interior of the water evaporator 13 so that the gas mixture receives the heat from the combustion gas for a longer time period. In addition, the passage separation 61 suppresses convection of the gas mixture and thus inhibits the gas mixture flowing upward to the region in the vicinity of the first separating plate 64 from being mixed into a gas mixture with a lower temperature existing below.

The porous metal portion (gas mixture promoting means) 62 is disposed at a position of the water evaporator 13 (in the vicinity of the first separating plate 64). The gas mixture flows toward the reforming catalyst body 14 through pores of the porous metal portion 62. The porous metal portion 62 promotes mixing of the feed gas and the steam while the gas mixture flows through the pores of the porous metal portion 62. Further, the pores of the porous metal portion 62 increases a surface area for transferring heat to the gas mixture flowing therethrough. As a result, heat conductivity from the combustion gas to the gas mixture improves, thus increasing the temperature of the gas mixture.

Thereafter, the gas mixture is caused to gather to the second gas mixture injection hole 66 (gas mixing promoting means) by the first annular separating plate 64, and flows into the first sub-space 54 through the second gas mixture injection hole 66. In this manner, when the feed gas and the steam flow from the interior of the water evaporator 13 into the first sub-space 54, they are caused to gather at one spot corresponding to the second gas mixture hole 66, thus promoting mixing of these gases.

Then, the gas mixture flows radially outward from the first sub-space 54 through the interior of the first pipe 57. Then, the gas changes its direction about 90 degrees to flow axially in the interior of the second pipe 58 and passes through the second separating plate 65. Then, the gas mixture changes its direction about 90 degrees again to flow radially inward (toward the center of the second sub-space 55) in the interior of the third pipe 59 and into the second sub-space 55. By injecting the gas mixture at a predetermined flow rate toward the center of the second sub-space 55, the gas mixture is uniformly supplied over the entire region in the circumferential direction of the second-sub-space 55.

Thereafter, the gas mixture flows from the second sub-space 55 uniformly in the circumferential direction to the reforming catalyst body 14 through the plurality of first gas mixture injection holes 70 arranged in the circumferential direction of the support element 43 and the annular gap 60 formed between the support element 43 and the first tubular wall element 11. In the interior of the reforming catalyst body 14, the gas mixture is converted into the reformed gas, which is guided to downstream side through the path described in the embodiment 1.

As indicated by an arrow of Fig. 10, as described above, the gas mixture is guided from the first sub-space 54 to the second sub-space 55 through the bypass passage (gas mixture promoting means) 56 in substantially U-shape that opens leftward so as to pass through the second separating plate 65.

In this case, the gas mixture in the first sub-space 54 is caused to gather into the bypass passage 56 (first, second, and third pipes 57, 58, and 59), and thus mixing of the gas mixture is promoted. In addition, since the gas mixture flowing in the bypass passage 56 changes its direction approximately 90 degrees, the flow is disordered. As a result, mixing of the gas mixture is further promoted.

### (Embodiment 4)

Subsequently, a construction and operation of a fuel cell system comprising a fuel cell configured to generate power using the reformed gas containing hydrogen which is supplied from the hydrogen generator 10 will be described as an example of the hydrogen generator 10 described in the embodiment 1 (Fig. 1), the embodiment 2 (Fig. 8), and the embodiment 3 (Fig. 9).

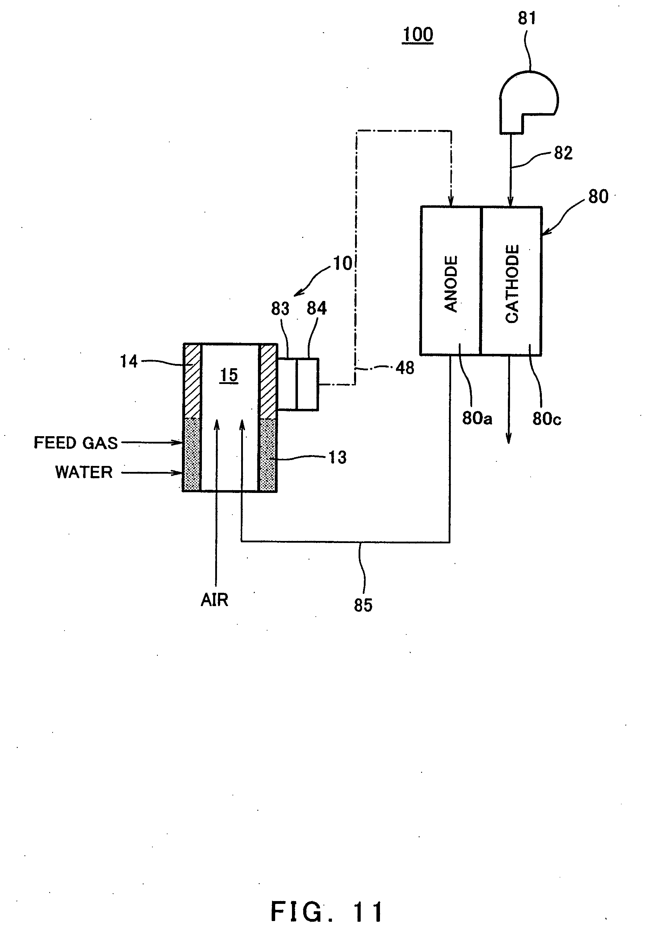

Fig. 11 is a block diagram schematically showing a construction of the fuel cell system according to an embodiment 4 of the present invention.

A fuel cell system 100 comprises the hydrogen generator 10, and a fuel cell configured to generate power using the reformed gas containing hydrogen which is supplied from the hydrogen generator 10.

Since the configurations of the water evaporator 13, the reforming catalyst body 14, and the burner 15 of the hydrogen generator 10 are identical to those of the embodiments 1 to 3, they will not be further described.

Since the reformed gas that has just flowed from the reforming catalyst body 14 of the hydrogen generator 10 contains carbon monoxide (hereinafter referred to as CO gas) as side-reaction product, the CO poisons the catalyst of the fuel cell 80, causing degradation of power generation capability of the fuel cell 80 if the reformed gas containing the CO gas is directly supplied to an anode 80a of the fuel cell 80. For this reason, a shift converter 83 and a purifier 84 are internally provided in the hydrogen generator 10 to reduce the concentration of the CO in the reformed gas flowing out from the reforming catalyst body 14 before the reformed gas is supplied to the fuel cell 80. More specifically, in the shift converter 83, the CO in the reformed gas sent from the reforming catalyst body 14 is converted into carbon dioxide through a shift reaction using the steam. Thereby, the concentration of the CO in the reformed gas is reduced to approximately 0.5%. In the purifier 84, the CO in the reformed gas sent from the shift converter 83 is converted into carbon dioxide through selective oxidation using oxygen. As a result, the concentration of the CO in the reformed gas is further reduced to approximately 10ppm or less.

As shown in Fig. 11, the reformed gas containing hydrogen flows out from the purifier 84 and is supplied to the anode 80a of the fuel cell 80 through the reformed gas exhaust pipe 48 (see Figs. 1, 8 and 9), while air is supplied from an air supply device 81 (blower) to a cathode 80c of the fuel cell 80 through a cathode air pipe 82.

In the interior of the fuel cell 80, power generation operation is carried out using the reformed gas (hydrogen) supplied to the anode 80a and the air (oxygen) supplied to the cathode 80c to generate predetermined power.

A reformed gas (hydrogen: off gas) that has not been consumed in the anode 80a of the fuel cell 80 may be guided to the burner 15 through an off gas pipe 85 connected to the fuel gas pipe 17 (see Figs. 1, 8, and 9), and used as the fuel gas for the burner 15, after water has been removed from the reformed gas by appropriate water removing means.

In accordance with this embodiment, the fuel cell system 100 improves durability with respect to the heat cycle and achieves low cost by simplifying the construction of the gas passage of the hydrogen generator 10.

During a low-load operation of the fuel cell system 100, typically, the combustion amount of the burner 15 in the hydrogen generator 10 is less, and combustion of the burner 15 is susceptible to external disturbance such as strong wind. For this reason, by applying the hydrogen generator 10 that employs the downward flame emission (see Fig. 8) of the burner 15 to the fuel cell system 100, stability of combustion of the burner 15 which is achieved by the downward flame emission of the burner 15 described in the embodiment 2 improves noticeably.

### Industrial Applicability

A hydrogen generator of the present invention improves durability with respect to the heat cycle and achieves low cost by simplifying the construction of the gas passage, and is thus applicable to fuel cell systems for household uses or other systems that carries out DSS operation.

## Claims

1. A hydrogen generator (10) comprising:
a first tubular wall element (11) extending along and thereby defining an axial direction;
a second tubular wall element (12) disposed outside said first tubular wall element and coaxially with said first tubular wall element, such that a tubular space is formed between said first and second tubular wall elements;
a tubular water evaporator (13) and a tubular reforming catalyst body (14) arranged in said tubular space one after another with respect to said axial direction;
a water inlet (41i) from which water is supplied to said water evaporator; and
a feed gas inlet (40i) from which a feed gas is supplied to said water evaporator; wherein said hydrogen generator is configured to cause a gas mixture containing steam and the feed gas to flow from said water evaporator along said axial direction to said reforming catalyst body and to reform the gas mixture into a reformed gas containing hydrogen.

2. The hydrogen generator according to claim 1, wherein said hydrogen generator (10) is configured to cause the reformed gas to flow from an axial end of said reforming catalyst body.

3. The hydrogen generator according to claims 1 or 2, wherein said first and second tubular wall elements (11, 12) are each constructed of a cylindrical seamless pipe.

4. The hydrogen generator according to any of claims 1 to 3, further comprising:
a burner (15) configured to combust a combustible gas to generate a combustion gas; and
a third tubular wall element (16) disposed inward of said first tubular wall element and coaxially with said first tubular wall element, wherein said hydrogen generator is configured to cause the combustion gas to flow in a further tubular space which is a combustion gas passage formed between said first and third tubular wall elements.

5. The hydrogen generator according to claim 4, wherein said burner (15) is disposed in an internal space of said third tubular wall element, said hydrogen generator further comprising:
a first lid element (24) disposed with a gap between said first lid element and an upper end of said third tubular wall element so as to close an upper end of said first tubular wall element, wherein the combustion gas generated in said burner is caused to flow from an interior of said third tubular wall element into the combustion gas passage through the gap.

6. The hydrogen generator according to claim 5, wherein said first tubular wall element (11) is provided with a combustion gas outlet (32) through which the combustion gas flowing in the combustion gas passage is guided to outside, and a combustion gas exhaust pipe (34) is connected to said first tubular wall element to allow the combustion gas flowing out from the combustion gas outlet to be guided radially and downward of said first tubular wall element.

7. The hydrogen generator according to claim 5 or 6, further comprising a width equalizing means for reducing a variation in a width of the combustion gas passage to equalize the width over an entire region in a circumferential direction of the combustion gas passage.

8. The hydrogen generator according to claim 7, wherein said width equalizing means includes a plurality of protrusions (35) that have equal height and protrude from said third tubular wall element toward said first tubular wall element, and tip ends of the protrusions are configured to contact said first tubular wall element.

9. The hydrogen generator according to claim 8, wherein the protrusions (35) are formed on said third tubular wall element such that the protrusions are arranged to be spaced a predetermined distance apart from each other in a circumferential direction of said third tubular wall element.

10. The hydrogen generator according to claim 7, wherein said width equalizing means includes a flexible rod element that is disposed to extend in a circumferential direction of said third tubular wall element and has an equal cross-section, said rod element being sandwiched between said first and third tubular wall elements.

11. The hydrogen generator according to claim 10, wherein said rod element is a round rod having an equal diameter.

12. The hydrogen generator according to any of claims 1 to 11, wherein said first tubular wall element is provided with a porous metal film (62) on an outer peripheral surface thereof, and said water evaporator has a water reservoir that is formed between the porous metal film and an inner peripheral surface of said second tubular wall element.

13. The hydrogen generator according to claim 12, wherein the porous metal film is provided over an entire outer peripheral surface of said first tubular wall element.

14. The hydrogen generator according to any of claims 3 to 13, further comprising:
a tubular cover (22) that is configured to cover said second tubular wall element and forms a double-walled pipe along with said second tubular wall element, wherein the reformed gas flowing out from said reforming catalyst body is caused to flow in a tubular space between said second tubular wall element and said tubular cover.

15. The hydrogen generator according to claim 14, further comprising:
a flexible rod element (46) disposed at a position of the reformed gas passage to extend in a circumferential direction of said second tubular wall element, and the rod element is sandwiched between said second tubular wall element and said tubular cover.

16. The hydrogen generator according to any of claims 1 to 15, further comprising:
a gas mixture promoting means configured to promote mixing of steam in an interior of said water evaporator with the feed gas supplied through said feed gas inlet.

17. The hydrogen generator according to claim 16, wherein said gas mixture promoting means includes a porous metal portion having a number of pores through which the gas mixture flows.

18. The hydrogen generator according to claim 16 or 17, further comprising:
an annular support element that is disposed between said first and second tubular wall elements and is configured to support said reforming catalyst body;
a first annular separating plate (70) disposed to cover an upper end of said water evaporator; and
a boundary space defined by said support element and said first annular separating plate;
wherein said gas mixture promoting means includes a hole (70) formed on said first annular separating plate (64), and
wherein the feed gas and the steam in the interior of said water evaporator are caused to gather to the hole to be mixed, and flow into said boundary space.

19. The hydrogen generator according to claim 18, further comprising:
a second separating plate (65) configured to divide said boundary space in two;
a first sub-space defined by said first and second separating plates; and
a second sub-space defined by said second separating plate and said support element, wherein
said gas mixing promoting means includes a bypass passage connecting an interior of said first sub-space to an interior of said second sub-space.

20. The hydrogen generator according to claim 19, wherein the bypass passage includes a first pipe extending radially outward of said second tubular wall element and a second pipe that is connected to the first pipe and extends in the axial direction of said second tubular wall element so as to pass through said second separating plate.

21. The hydrogen generator according to claim 20, wherein the second pipe extends in a direction perpendicular to the first pipe.

22. The hydrogen generator according to any of claims 19 to 21, wherein the gas mixture is caused to flow from said first sub-space into the bypass passage and to flow into said second sub-space toward an inner side in a circumferential direction of said second sub-space.

23. A fuel cell system comprising:
a hydrogen generator according to any one of claims 1 through 22; and
a fuel cell (80) configured to generate power using a reformed gas containing hydrogen that is supplied from said hydrogen generator.

## Patentansprüche

1. Wasserstoffgenerator (10), der umfasst:
ein erstes rohrförmiges Wandelement (11), das sich entlang einer axialen Richtung erstreckt, welche es dadurch definiert;
ein zweites rohrförmiges Wandelement (12), das außerhalb des ersten rohrförmigen Wandelements angeordnet ist und koaxial zu dem ersten rohrförmigen Wandelement verläuft, so dass zwischen dem ersten und dem zweiten rohrförmigen Wandelement ein rohrförmiger Zwischenraum ausgeformt ist;
einen rohrförmiger Wasserverdampfer (13) und einen rohrförmigen Reformierkatalysatorkörper (14), die in Bezug auf die axiale Richtung einer nach dem anderen in dem rohrförmigen Zwischenraum ausgerichtet sind;
einen Wassereinlass (41i), aus dem Wasser an den Wasserverdampfer zugeführt wird; und
einen Speisegaseinlass (40i), aus dem ein Speisegas an den Wasserverdampfer zugeführt wird;
wobei der Wasserstoffgenerator dazu konfiguriert ist, eine Gasmischung aus Dampf und dem Speisegas zu veranlassen, von dem Wasserverdampfer entlang der axialen Richtung zu dem Reformierkatalysatorkörper zu strömen und dazu, die Gasmischung in ein reformiertes, wasserstoffhaltiges Gas zu reformieren.

2. Wasserstoffgenerator gemäß Anspruch 1, wobei der Wasserstoffgenerator (10) dazu konfiguriert ist, das reformierte Gas zu veranlassen, von einem axialen Ende des Reformierkatalysatorkörpers zu strömen.

3. Wasserstoffgenerator gemäß Anspruch 1 oder 2, wobei das erste und das zweite rohrförmige Wandelement (11, 12) jeweils aus einem zylindrischen, nahtlosen Rohr ausgeformt sind.

4. Wasserstoffgenerator gemäß einem der Ansprüche 1 bis 3, wobei der Generator weiterhin umfasst:
einen Brenner (15), der dazu konfiguriert ist, ein brennbares Gas zu verbrennen, um ein Brenngas zu erzeugen; und
ein drittes rohrförmiges Wandelement (16), das nach innen von dem ersten rohrförmigen Wandelement und koaxial zu dem ersten rohrförmigen Wandelement angeordnet ist, wobei der Wasserstoffgenerator dazu konfiguriert ist, das Brenngas zu veranlassen, in einen weiteren rohrförmigen Zwischenraum zu strömen, bei dem es sich um einen Brenngasdurchgang handelt, welcher zwischen dem ersten und dem dritten rohrförmigen Wandelement ausgeformt ist.

5. Wasserstoffgenerator gemäß Anspruch 4, wobei der Brenner (15) in einem Innenraum des dritten rohrförmigen Wandelements angeordnet ist, wobei der Wasserstoffgenerator weiterhin umfasst:
ein erstes Deckelelement (24), das mit einer Lücke zwischen dem ersten Deckelelement und einem oberen Ende des dritten rohrförmigen Wandelements angeordnet ist, um ein oberes Ende des ersten rohrförmigen Wandelements zu verschließen, wobei das in dem Brenner erzeugte Brenngas veranlasst wird, von einem Inneren des dritten rohrförmigen Wandelements durch die Lücke in den Brenngasdurchgang zu strömen.

6. Wasserstoffgenerator gemäß Anspruch 5, wobei das erste rohrförmige Wandelement (11) mit einem Brenngasauslass (32) ausgestattet ist, durch den das in den Brenngasdurchgang strömende Brenngas nach außen abgeführt wird, und wobei ein Brenngasabfuhrrohr (34) mit dem ersten rohrförmigen Wandelement verbunden ist, um dem aus dem Brenngasauslass strömenden Brenngas zu ermöglichen, von dem ersten rohrförmigen Wandelement radial und nach unten abgeführt zu werden.

7. Wasserstoffgenerator gemäß Anspruch 5 oder 6, der weiterhin ein Breitenausgleichsmittel zur Reduzierung einer Abweichung in einer Breite des Brenngasdurchgangs umfasst, um die Breite über einen gesamten Bereich in einer Umfangsrichtung des Brenngasdurchgangs auszugleichen.

8. Wasserstoffgenerator gemäß Anspruch 7, wobei das Breitenausgleichsmittel eine Mehrzahl von Vorsprüngen (35) umfasst, welche eine gleiche Höhe aufweisen und von dem dritten rohrförmigen Wandelement zu dem ersten rohrförmigen Wandelement hervorstehen, wobei die Spitzenenden der Vorsprünge dazu konfiguriert sind, mit dem ersten rohrförmigen Wandelement in Kontakt zu sein.

9. Wasserstoffgenerator gemäß Anspruch 8, wobei die Vorsprünge (35) an dem dritten rohrförmigen Wandelement derart ausgeformt sind, dass die Vorsprünge dazu ausgerichtet sind, in einem vorbestimmten Abstand voneinander in einer Umfangsrichtung des dritten rohrförmigen Wandelements beabstandet zu sein.

10. Wasserstoffgenerator gemäß Anspruch 7, wobei das Breitenausgleichsmittel ein flexibles Stabelement umfasst, welches derart angeordnet ist, dass es sich in einer Umfangsrichtung des dritten rohrförmigen Wandelements erstreckt und einen gleichen Querschnitt aufweist, wobei das Stabelement von dem ersten und dem dritten Wandelement sandwichartig umgeben ist.

11. Wasserstoffgenerator gemäß Anspruch 10, wobei es sich bei dem Stabelement um einen Rundstab handelt, der einen gleichen Durchmesser aufweist.

12. Wasserstoffgenerator gemäß einem der Ansprüche 1 bis 11, wobei das erste rohrförmige Wandelement mit einem porösen Metallfilm (62) an einer äußeren Umfangsfläche davon ausgestattet ist, und der Wasserverdampfer ein Wasserreservoir aufweist, das zwischen dem porösen Metallfilm und einer inneren Umfangsfläche des zweiten rohrförmigen Wandelements ausgeformt ist.

13. Wasserstoffgenerator gemäß Anspruch 12, wobei der poröse Metallfilm über eine gesamte äußere Umfangsfläche des ersten rohrförmigen Wandelements zur Verfügung gestellt ist.

14. Wasserstoffgenerator gemäß einem der Ansprüche 3 bis 13, wobei der Generator weiterhin umfasst:
eine rohrförmige Abdeckung (22), die dazu konfiguriert ist, das zweite rohrförmige Wandelement abzudecken und zusammen mit dem zweiten rohrförmigen Wandelement ein doppelwandiges Rohr bildet, wobei das aus dem Reformierkatalysatorkörper ausströmende reformierte Gas veranlasst wird, in einen rohrförmigen Zwischenraum zwischen dem zweiten rohrförmigen Wandelement und der rohrförmigen Abdeckung zu strömen.

15. Wasserstoffgenerator gemäß Anspruch 14, der weiterhin umfasst:
ein flexibles Stabelement (46), das an einer Stelle des Durchgangs für das reformierte Gas angeordnet ist, um sich in einer Umfangsrichtung des zweiten rohrförmigen Wandelements zu erstrecken, und wobei das Stabelement von dem zweiten rohrförmigen Wandelement und der rohrförmigen Abdeckung sandwichartig umgeben ist.

16. Wasserstoffgenerator gemäß einem der Ansprüche 1 bis 15, wobei der Generator weiterhin umfasst:
ein Gasmisschungsförderungsmittel, das dazu konfiguriert ist, das Mischen von Dampf in einem Inneren des Wasserverdampfers mit dem durch den Speisegaseinlass zugeführten Speisegas zu fördern.

17. Wasserstoffgenerator gemäß Anspruch 16, wobei das Gasmisschungsförderungsmittel einen porösen Metallabschnitt umfasst, der eine Anzahl von Poren aufweist, durch welche die Gasmischung strömt.

18. Wasserstoffgenerator gemäß Anspruch 16 oder 17, der weiterhin umfasst:
ein ringförmiges Trägerelement, das zwischen dem ersten und dem zweiten rohrförmigen Wandelement angeordnet ist und dazu konfiguriert ist, den Reformierkatalysatorkörper zu tragen;
eine erste ringförmige Trennplatte (64), die derart angeordnet ist, dass sie ein oberes Ende des Wasserverdampfers abdeckt; und
einen Begrenzungsraum, der durch das Trägerelement und die erste ringförmige Trennplatte definiert wird;
wobei das Gasmisschungsförderungsmittel ein Loch (70) umfasst, das an der ersten ringförmigen Trennplatte (64) ausgeformt ist, und
wobei das Speisegas und der Dampf im Inneren des Wasserverdampfers veranlasst werden, sich in dem Loch zu sammeln, um vermischt zu werden, und in den Begrenzungsraum strömen.

19. Wasserstoffgenerator gemäß Anspruch 18, der weiterhin umfasst:
eine zweite Trennplatte (65), die dazu konfiguriert ist, den Begrenzungsraum in zwei Bereiche zu unterteilen;
einen ersten Unter-Raum, der von der ersten und der zweiten Trennplatte definiert wird; und
einen zweiten Unter-Raum, der von der zweiten Trennplatte und dem Trägerelement definiert wird, wobei
das Gasmisschungsförderungsmittel einen Umgehungsdurchgang umfasst, der ein Inneres des ersten Unter-Raums mit einem Inneren des zweiten Unter-Raums verbindet.

20. Wasserstoffgenerator gemäß Anspruch 19, wobei der Umgehungsdurchgang umfasst: ein erstes Rohr, das sich radial nach außen von dem zweiten rohrförmigen Wandelement erstreckt, und ein zweites Rohr, das mit dem ersten Rohr verbunden ist und sich in der axialen Richtung des zweiten rohrförmigen Wandelements derart erstreckt, dass es durch die zweite Trennplatte hindurch geht.

21. Wasserstoffgenerator gemäß Anspruch 20, wobei das zweite Rohr sich in einer rechtwinklig zu dem ersten Rohr verlaufenden Richtung erstreckt.

22. Wasserstoffgenerator gemäß einem der Ansprüche 19 bis 21, wobei die Gasmischung veranlasst wird, von dem ersten Unter-Raum in den Umgehungsdurchgang zu strömen und in den zweiten Unter-Raum zu einer Innenseite in einer Umfangsrichtung des zweiten Unter-Raums zu strömen.

23. Brennstoffzellensystem, das umfasst:
einen Wasserstoffgenerator gemäß einem der Ansprüche 1 bis 22; und
eine Brennstoffzelle (80), die dazu konfiguriert ist, mit Hilfe eines reformierten Gases, das aus dem Wasserstoffgenerator stammenden Wasserstoff enthält, Strom zu erzeugen.

## Revendications

1. Générateur d'hydrogène (10) comprenant :
un premier élément de paroi tubulaire (11) s'étendant dans la longueur et définissant ainsi un sens axial,
un deuxième élément de paroi tubulaire (12) situé en-dehors dudit premier élément de paroi tubulaire et de manière coaxiale audit premier élément de paroi tubulaire, de manière à former un espace tubulaire entre lesdits premier et deuxième éléments de paroi tubulaires,
un évaporateur d'eau (13) tubulaire et un corps catalyseur de reformage (14) tubulaire agencés dans ledit espace tubulaire l'un derrière l'autre par rapport audit sens axial,
une admission d'eau (41i) par laquelle de l'eau est apportée audit évaporateur d'eau, et
une admission de gaz matière première (40i) par laquelle un gaz matière première est apporté audit évaporateur d'eau ;
dans lequel ledit générateur d'hydrogène est configuré pour amener un mélange gazeux contenant de la vapeur d'eau et du gaz matière première à s'écouler depuis ledit évaporateur d'eau, dans ledit sens axial, jusqu'audit corps catalyseur de reformage et pour reformer le mélange gazeux en un gaz reformé contenant de l'hydrogène.

2. Générateur d'hydrogène selon la revendication 1, dans lequel ledit générateur d'hydrogène (10) est configuré pour amener le gaz reformé à s'écouler depuis une extrémité axiale dudit corps catalyseur de reformage.

3. Générateur d'hydrogène selon la revendication 1 ou 2, dans lequel lesdits premier et deuxième éléments de paroi tubulaires (11, 12) sont chacun construits dans un tuyau cylindrique sans soudure.

4. Générateur d'hydrogène selon l'une quelconque des revendications 1 à 3, comprenant en outre :
un brûleur (15) configuré pour brûler un gaz combustible pour générer un gaz de combustion, et
un troisième élément de paroi tubulaire (16) situé sur l'intérieur dudit premier élément de paroi tubulaire et de manière coaxiale audit premier élément de paroi tubulaire, ledit générateur d'hydrogène étant configuré pour amener le gaz de combustion à s'écouler dans un autre espace tubulaire consistant en un passage pour gaz de combustion formé entre lesdits premier et troisième éléments de paroi tubulaires.

5. Générateur d'hydrogène selon la revendication 4, dans lequel ledit brûleur (15) est situé dans un espace interne dudit troisième élément de paroi tubulaire, ledit générateur d'hydrogène comprenant en outre :
un premier élément de couvercle (24) situé avec un certain écart entre ledit premier élément de couvercle et une extrémité supérieure dudit troisième élément de paroi tubulaire de manière à clore une extrémité supérieure dudit premier élément de paroi tubulaire, le gaz de combustion généré dans ledit brûleur étant amené à s'écouler depuis l'intérieur dudit troisième élément de paroi tubulaire vers le passage pour gaz de combustion en traversant l'écart.

6. Générateur d'hydrogène selon la revendication 5, dans lequel ledit premier élément de paroi tubulaire (11) est pourvu d'une sortie de gaz de combustion (32) par laquelle le gaz de combustion s'écoulant dans le passage pour gaz de combustion est guidé vers l'extérieur, et un tuyau d'évacuation de gaz de combustion (34) est relié audit premier élément de paroi tubulaire pour permettre au gaz de combustion sortant par la sortie de gaz de combustion d'être guidé radialement et vers le bas dudit premier élément de paroi tubulaire.

7. Générateur d'hydrogène selon la revendication 5 ou 6, comprenant en outre un moyen d'uniformisation de largeur visant à réduire les variations dans la largeur du passage pour gaz de combustion afin d'uniformiser la largeur sur l'intégralité d'une zone dans le sens circonférentiel du passage pour gaz de combustion.

8. Générateur d'hydrogène selon la revendication 7, dans lequel ledit moyen d'uniformisation de largeur comporte une pluralité de protubérances (35) d'égale hauteur et faisant saillie à partir dudit troisième élément de paroi tubulaire vers ledit premier élément de paroi tubulaire, et les extrémités terminales des protubérances sont configurées pour venir au contact dudit premier élément de paroi tubulaire.

9. Générateur d'hydrogène selon la revendication 8, dans lequel les protubérances (35) sont formées sur ledit troisième élément de paroi tubulaire de manière que les protubérances sont agencées en étant espacées selon une distance prédéterminée les unes des autres dans le sens circonférentiel dudit troisième élément de paroi tubulaire.

10. Générateur d'hydrogène selon la revendication 7, dans lequel ledit moyen d'uniformisation de largeur comporte un élément de tige flexible qui est situé de manière à s'étendre dans le sens circonférentiel dudit troisième élément de paroi tubulaire et présente une section transversale uniforme, ledit élément de tige étant enserré entre lesdits premier et troisième éléments de paroi tubulaires.

11. Générateur d'hydrogène selon la revendication 10, dans lequel ledit élément de tige est une tige ronde présentant un diamètre uniforme.

12. Générateur d'hydrogène selon l'une quelconque des revendications 1 à 11, dans lequel ledit premier élément de paroi tubulaire est pourvu d'une pellicule de métal poreuse (62) sur une surface périphérique extérieure de celui-ci, et ledit évaporateur d'eau présente un réservoir d'eau formé entre la pellicule de métal poreuse et une surface périphérique intérieure dudit deuxième élément de paroi tubulaire.

13. Générateur d'hydrogène selon la revendication 12, dans lequel la pellicule de métal poreuse est prévue sur l'intégralité de la surface périphérique extérieure dudit premier élément de paroi tubulaire.

14. Générateur d'hydrogène selon l'une quelconque des revendications 3 à 13, comprenant en outre :
une enveloppe tubulaire (22) qui est configurée pour recouvrir ledit deuxième élément de paroi tubulaire et qui forme un tuyau à double paroi avec ledit deuxième élément de paroi tubulaire, le gaz reformé qui sort dudit corps catalyseur de reformage étant amené à s'écouler dans un espace tubulaire entre ledit deuxième élément de paroi tubulaire et ladite enveloppe tubulaire.

15. Générateur d'hydrogène selon la revendication 14, comprenant en outre :
un élément de tige flexible (46) situé en un emplacement du passage pour gaz reformé de manière à s'étendre dans le sens circonférentiel dudit deuxième élément de paroi tubulaire, et l'élément de tige est enserré entre ledit deuxième élément de paroi tubulaire et ladite enveloppe tubulaire.

16. Générateur d'hydrogène selon l'une quelconque des revendications 1 à 15, comprenant en outre :
un moyen promoteur de mélange gazeux configuré pour promouvoir le mélange de la vapeur d'eau, à l'intérieur dudit évaporateur d'eau, avec le gaz matière première introduit par ladite admission de gaz matière première.

17. Générateur d'hydrogène selon la revendication 16, dans lequel ledit moyen promoteur de mélange gazeux comporte une partie en métal poreuse présentant un certain nombre de pores par lesquels s'écoule le mélange gazeux.

18. Générateur d'hydrogène selon la revendication 16 ou 17, comprenant en outre :
un élément de support annulaire situé entre lesdits premier et deuxième éléments de paroi tubulaires et configuré pour supporter ledit corps catalyseur de reformage,
une première plaque de séparation annulaire (64) située de manière à recouvrir une extrémité supérieure dudit évaporateur d'eau, et
un espace limite délimité par ledit élément de support et ladite première plaque de séparation annulaire ;
dans lequel ledit moyen promoteur de mélange gazeux comporte un trou (70) formé sur ladite première plaque de séparation annulaire (64), et
dans lequel le gaz matière première et la vapeur d'eau de l'intérieur dudit évaporateur d'eau sont amenés à se regrouper vers le trou afin d'être mélangés, et s'écoulent dans ledit espace limite.

19. Générateur d'hydrogène selon la revendication 18, comprenant en outre :
une deuxième plaque de séparation (65) configurée pour diviser ledit espace limite en deux,
un premier sous-espace délimité par lesdites première et deuxième plaques de séparation, et
un deuxième sous-espace délimité par ladite deuxième plaque de séparation et ledit élément de support ; dans lequel
ledit moyen promoteur de mélange gazeux comporte un passage de dérivation reliant l'intérieur dudit premier sous-espace à l'intérieur dudit deuxième sous-espace.

20. Générateur d'hydrogène selon la revendication 19, dans lequel le passage de dérivation comporte un premier tuyau qui s'étend radialement vers l'extérieur dudit deuxième élément de paroi tubulaire et un deuxième tuyau qui est relié au premier tuyau et qui s'étend dans le sens axial dudit deuxième élément de paroi tubulaire de manière à traverser ladite deuxième plaque de séparation.

21. Générateur d'hydrogène selon la revendication 20, dans lequel le deuxième tuyau s'étend dans un sens perpendiculaire au premier tuyau.

22. Générateur d'hydrogène selon l'une quelconque des revendications 19 à 21, dans lequel le mélange gazeux est amené à s'écouler depuis ledit premier sous-espace vers le passage de dérivation et à s'écouler dans ledit deuxième sous-espace vers un côté intérieur dans le sens circonférentiel dudit deuxième sous-espace.

23. Système à pile à combustible comprenant :
un générateur d'hydrogène selon l'une quelconque des revendications 1 à 22, et
une pile à combustible (80) configurée pour générer de l'électricité au moyen d'un gaz reformé contenant de l'hydrogène fourni par ledit générateur d'hydrogène.
